# EUROPEAN PATENT APPLICATION

(11) **EP 3 554 084 A1**
(43) Date of publication of application: **16.10.2019**
(21) Application number: 17879394.9
(22) Date of filing: 24.11.2017
(51) Int. Cl.: H04N 19/65, H04N 19/103, H04N 19/105, H04N 19/134, H04N 19/174, H04N 19/46

(54) **IMAGE PROCESSING DEVICE AND METHOD**

(30) Priority: 07.12.2016 JP 2016237270
(71) Applicant: Sony Semiconductor Solutions Corporation, Atsugi-shi, Kanagawa 243-0014 (JP)
(72) Inventor: TSUCHIYA, Toshiharu, Atsugi-shi Kanagawa 243-0014 (JP)
(74) Representative: D Young & Co LLP
(86) International application number: PCT/JP2017/042151
(87) International publication number: WO 2018/105410

(57) **Abstract**

The present disclosure relates to an image processing device and a method that are capable of preventing transmission error propagation in an image.

In a screen (a picture), a region called an intra stripe for intra prediction is assigned to a vertical direction, and the intra stripe is moved in a horizontal direction so that all the units of coding in the screen become the intra stripe. However, the regions to the right and the left of the intra stripe are limited to a left inter block and a right inter block in which inter prediction is performed. For example, the present disclosure can be applied to an image processing device, an image encoding device, an image decoding device, or the like.

## Description

### TECHNICAL FIELD

The present disclosure relates to image processing devices and methods, and more particularly, to an image processing device and a method capable of preventing transmission error propagation in an image.

### BACKGROUND ART

Generally speaking, a method of recovering from a transmission error is being widely used as a technique called gradual decoding refresh (GDR).

In Moving Picture Experts Group 2 (MPEG2 (ISO/IEC 13818-2)), there is no concept of a predicted image using peripheral pixels for intra prediction. Thus, it is possible to recover from error by circulating an intra block in the temporal direction (see Patent Document 1).

### CITATION LIST

### PATENT DOCUMENT

Patent Document 1: Japanese Patent Application Laid-Open No. 2011-35444

### SUMMARY OF THE INVENTION

### PROBLEMS TO BE SOLVED BY THE INVENTION

However, in MPEG-4 Part 10 (Advanced Video Coding, which will be hereinafter referred to as AVC) and High Efficiency Video Coding (HEVC), predictions are made from peripheral pixels. Therefore, in a case where there is an error in a pixel to be used in making a prediction, there is a possibility that the error will be included in the intra block to be circulated.

The present disclosure is made in view of those circumstances, and is to enable prevention of transmission error propagation in an image.

### SOLUTIONS TO PROBLEMS

An image processing device according to a first aspect of the present technology includes a prediction mode determination unit that assigns an intra region to be subjected to intra prediction to an intra assignment direction before the image data of a plurality of pictures is encoded, obtains intra region coordinate information by moving the intra region in a direction perpendicular to the intra assignment direction so that all the units of coding in the pictures become the intra region, and, on the basis of the intra region coordinate information, determines inter prediction to be the prediction mode in a region peripheral to the intra region, the intra assignment direction being one of a vertical direction and a horizontal direction.

The image processing device may further include a setting unit that sets an intra prediction reference flag to ON when intra prediction is performed, the intra prediction reference flag indicating that adjacent pixel reference is restricted only to pixels in an intra region. In a case where the intra prediction reference flag is set to ON by the setting unit, the prediction mode determination unit can determine inter prediction to be the prediction mode in a region peripheral to the intra region, on the basis of the intra region coordinate information.

In a case where the intra assignment direction is a vertical direction, the prediction mode determination unit can determine inter prediction to be the prediction mode in regions to the right and the left of the intra region.

In a case where the intra assignment direction is a horizontal direction, the prediction mode determination unit can determine inter prediction to be the prediction mode in a region above the intra region.

The image processing device may further include a replacement unit that replaces an intra prediction direction with a direction in which there is no reference to pixels in an inter region, in a case where there is reference to pixels in an inter region in the determined intra prediction direction when the intra prediction is performed.

By an image processing method according to the first aspect of the present technology, an image processing device assigns an intra region to be subjected to intra prediction to an intra assignment direction before the image data of a plurality of pictures is encoded, obtains intra region coordinate information by moving the intra region in a direction perpendicular to the intra assignment direction so that all the units of coding in the pictures become the intra region, and, on the basis of the intra region coordinate information, determines inter prediction to be the prediction mode in a region peripheral to the intra region, the intra assignment direction being one of a vertical direction and a horizontal direction.

An image processing device according to a second aspect of the present technology includes a prediction mode determination unit that assigns an intra region to be subjected to intra prediction to an intra assignment direction before the image data of a plurality of pictures is encoded, obtains intra region coordinate information by moving the intra region in a direction perpendicular to the intra assignment direction so that all the units of coding in the pictures become the intra region, and, on the basis of the intra region coordinate information, determines a prediction mode not using a pixel adjacent to the intra region to be the intra prediction mode at a boundary portion of the intra region.

The image processing device may further include a setting unit that sets an intra prediction reference flag to OFF when intra prediction is performed, the intra prediction reference flag indicating that adjacent pixel reference is restricted only to pixels in an intra region. In a case where the intra prediction reference flag is set to OFF by the setting unit, the prediction mode determination unit can determine a prediction mode not using a pixel adjacent to the intra region to be the intra prediction mode at a boundary portion of the intra region, on the basis of the intra region coordinate information.

In a case where the intra assignment direction is a vertical direction, the prediction mode determination unit can determine a prediction mode not using a pixel adjacent to the intra region to be the intra prediction mode at boundary portions to the right and the left of the intra region.

In a case where the intra assignment direction is a horizontal direction, the prediction mode determination unit can determine a prediction mode not using a pixel adjacent to the intra region to be the intra prediction mode at a boundary portion above the intra region.

By an image processing method according to the second aspect of the present technology, an image processing device assigns an intra region to be subjected to intra prediction to an intra assignment direction before the image data of a plurality of pictures is encoded, obtains intra region coordinate information by moving the intra region in a direction perpendicular to the intra assignment direction so that all the units of coding in the pictures become the intra region, and, on the basis of the intra region coordinate information, determines a prediction mode not using a pixel adjacent to the intra region to be the intra prediction mode at a boundary portion of the intra region.

In the first aspect of the present technology, an intra region to be subjected to intra prediction is assigned to an intra assignment direction before the image data of a plurality of pictures is encoded, intra region coordinate information is obtained by moving the intra region in a direction perpendicular to the intra assignment direction so that all the units of coding in the pictures become the intra region, and, on the basis of the intra region coordinate information, inter prediction is determined to be the prediction mode in a region peripheral to the intra region, the intra assignment direction being one of a vertical direction and a horizontal direction.

In the second aspect of the present technology, an intra region to be subjected to intra prediction is assigned to an intra assignment direction before the image data of a plurality of pictures is encoded, intra region coordinate information is obtained by moving the intra region in a direction perpendicular to the intra assignment direction so that all the units of coding in the pictures become the intra region, and, on the basis of the intra region coordinate information, a prediction mode not using a pixel adjacent to the intra region is determined to be the intra prediction mode at a boundary portion of the intra region.

### EFFECTS OF THE INVENTION

According to the present disclosure, an image can be processed. Particularly, transmission error propagation in an image can be prevented.

### BRIEF DESCRIPTION OF DRAWINGS

Fig. 1 is an explanatory diagram for explaining a method of recovering from a transmission error using an intra stripe.
Fig. 2 is a diagram showing nine kinds of 4x4 pixel intra prediction modes for luminance signals in AVC and HEVC.
Fig. 3 is an explanatory diagram for explaining error propagation in a screen.
Fig. 4 is a diagram for explaining a method of preventing error propagation in a screen.
Fig. 5 is a diagram for explaining a method of preventing error propagation in a screen.
Fig. 6 is a block diagram showing an example configuration of an embodiment of an encoding device to which the present disclosure is applied.
Fig. 7 is a block diagram showing an example configuration of an encoding unit.
Fig. 8 is a flowchart for explaining a process to be performed by the encoding device.
Fig. 9 is a flowchart for explaining an encoding process in detail.
Fig. 10 is a flowchart for explaining an encoding process in detail.
Fig. 11 is a flowchart for explaining a mode determination process.
Fig. 12 is a block diagram showing an example configuration of an embodiment of a decoding device to which the present disclosure is applied.
Fig. 13 is a block diagram showing an example configuration of a decoding unit.
Fig. 14 is a flowchart for explaining an example flow in an inverse transform process.
Fig. 15 is a table showing an example syntax.
Fig. 16 is a diagram for explaining a method of preventing error propagation in a screen in a case where constrained_intra_pred_flag = 0.
Fig. 17 is a diagram for explaining an example of the prevention method shown in Fig. 5 in the case of horizontal stripes.
Fig. 18 is a diagram for explaining an example of the prevention method shown in Fig. 16 in the case of horizontal stripes.
Fig. 19 is a block diagram showing an example configuration of an embodiment of a television conference system to which the present technology is applied.
Fig. 20 is a block diagram showing a typical example configuration of a computer.
Fig. 21 is a block diagram schematically showing an example configuration of a television apparatus.
Fig. 22 is a block diagram schematically showing an example configuration of a portable telephone apparatus.
Fig. 23 is a block diagram schematically showing an example configuration of an imaging apparatus.
Fig. 24 is a block diagram schematically showing an example configuration of a network system.

### MODES FOR CARRYING OUT THE INVENTION

The following is a description of modes for carrying out the present disclosure (these modes will be hereinafter referred to as embodiments). Note that explanation will be made in the following order.
1. First embodiment (a recovery method using an intra stripe)
2. Second embodiment (a modification)
3. Third embodiment (an example of a television conference system)
4. Fourth embodiment (example applications)

### <1. First Embodiment>

### <Method of Recovering from a Transmission Error>

Generally speaking, a method of recovering from a transmission error is being widely used as a technique called gradual decoding refresh (GDR). In Moving Picture Experts Group 2 (MPEG2 (ISO/IEC 13818-2)), there is no concept of a predicted image using peripheral pixels for intra prediction. Thus, it is possible to recover from error by circulating an intra stripe (an intra block) in the temporal direction.

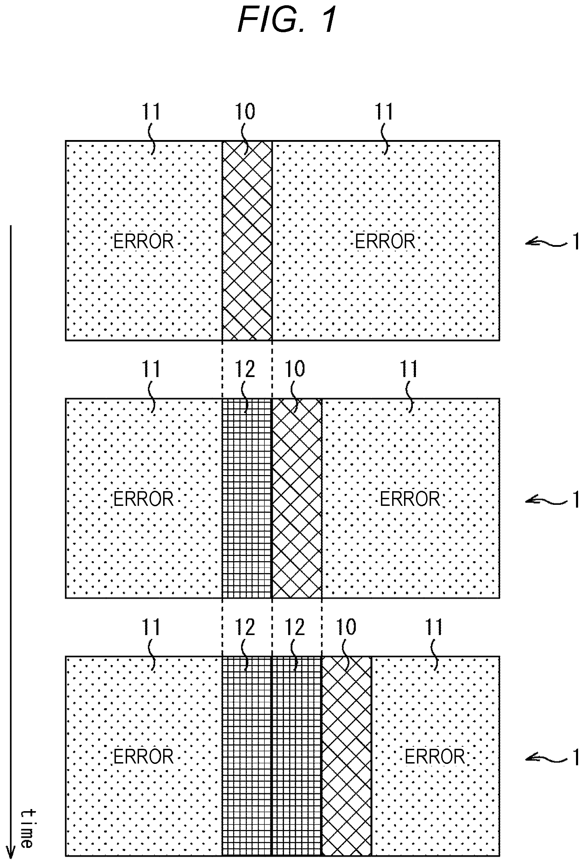

In an example illustrated in Fig. 1, a method of recovering from a screen 1 having a transmission error is shown with the passage of time. In the screen 1 having a transmission error, the region of blocks arranged in the vertical direction (the intra assignment direction) is set as an intra stripe 10 that is an intra block for intra prediction. Further, in the screen 1, the regions other than the intra stripe 10 are transmission error regions 11 in which there may be a transmission error.

The intra stripe 10 sequentially moves in the horizontal direction for each frame, and the region that was the intra stripe 10 in the previous frame becomes an error recovery region 12 that has recovered from error. Accordingly, as the intra stripe 10 is circulated for each frame, the screen 1 can recover from the transmission error. In other words, in the example illustrated in Fig. 1, the intra stripe 10 is moved in the horizontal direction so that all the units of coding in the screen 1 (picture) will have become an intra stripe 10 with the passage of time. As a result, the screen 1 can recover from the transmission error.

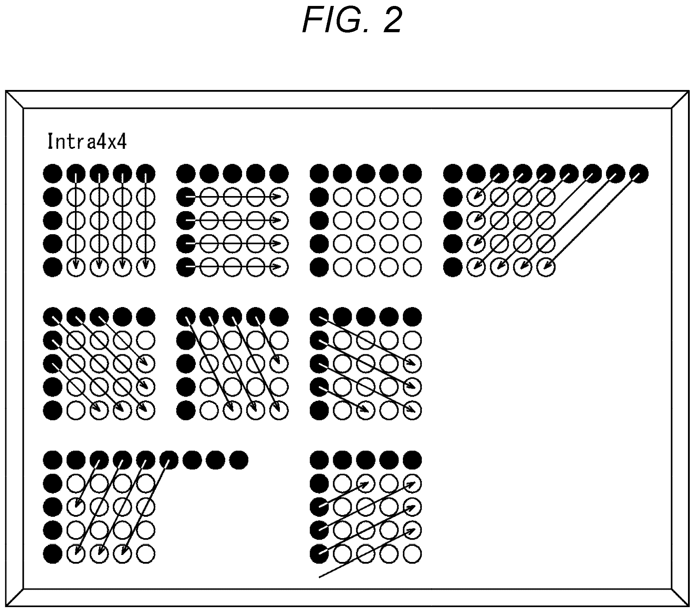

However, in MPEG-4 Part 10 (Advanced Video Coding, which will be hereinafter referred to as AVC) and High Efficiency Video Coding (HEVC), predictions are made from peripheral pixels, as shown in Fig. 2. Therefore, in a case where there is an error in a pixel to be used in making a prediction, there is a possibility that the error will be included in the intra stripe 10 to be circulated.

The example illustrated in Fig. 2 shows nine kinds of 4x4 pixel intra prediction modes (Intra_4x4_pred_mode) for luminance signals in AVC and HEVC. The eight modes, except for mode 2 indicating average value (DC) prediction, correspond to different directions from one another.

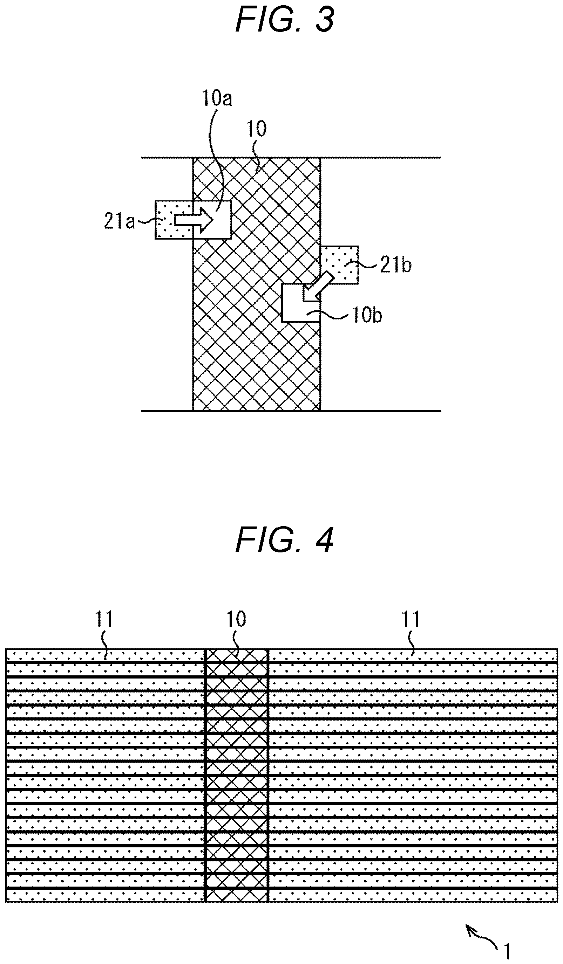

In view of this, as shown in Fig. 3, in a situation where there is an error in a block 21a adjacent to a block 10a (the intra stripe 10) at the time of intra prediction of the block 10a in the intra stripe 10, there is a possibility that the error will propagate in the intra stripe 10. Likewise, in a situation where there is an error in a block 21b adjacent to a block 10b (the intra stripe 10), there is a possibility that the error propagates in the intra stripe 10.

If constrained_intra_pred_flag = 1 is set in the picture header so that the peripheral blocks at a time of intra prediction are limited to intra prediction, or in the case of inter prediction, referring to the neighboring pixels is prohibited (cannot be performed). However, in a situation where the peripheral blocks are subjected to intra prediction, and have an error, the error will also propagate in the intra stripe 10.

On the other hand, according to another method, the screen 1 is divided into slices as indicated by bold lines in Fig. 4.

However, pixels outside the slices cannot be referred to in intra prediction, and therefore, prediction accuracy might become lower. Note that, in HEVC, there is also a method of dividing the screen 1 into tiles, instead of slices. In the case of tiles, there is a restriction on size, and therefore, the intra stripe might become slightly larger in size.

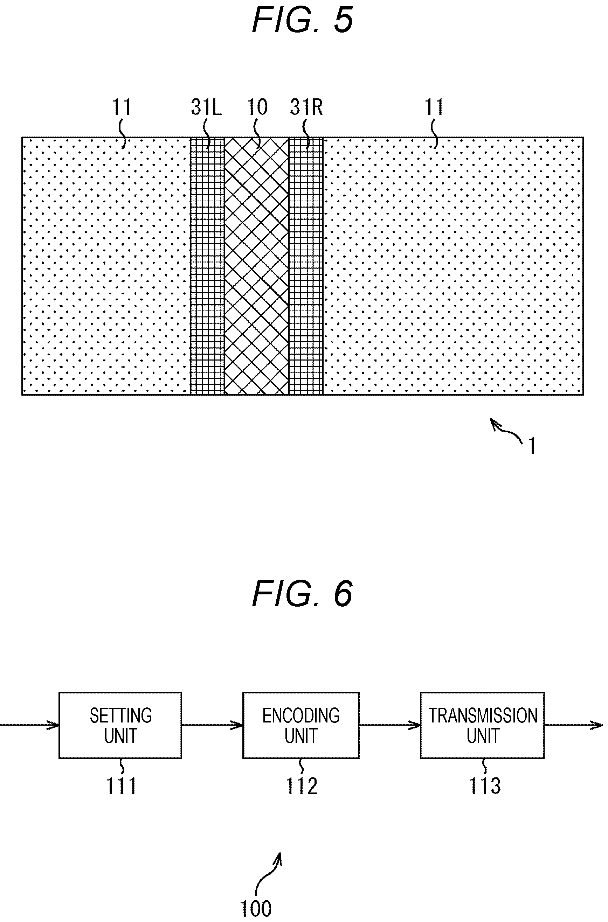

In view of this, according to the present technology, the regions to the left and the right of the intra stripe 10 are limited to inter blocks 31L and 31R for inter prediction in the screen 1 as shown in Fig. 5, and constrained intra_pred_flag = 1 is set in the picture header. With this arrangement, in the intra stripe 10, only the pixel values adjacent to the intra prediction pixel are referred to at a time of intra prediction. In other words, in the intra stripe 10, referring to the adjacent pixel values in the inter blocks 31L and 31R is prohibited at a time of intra prediction. Thus, in a case where there is an error in an adjacent block, the influence thereof can be prevented from propagating to the inside of the intra stripe 10 as described above with reference to Fig. 3.

### <Example Configuration of an Encoding Device>

Fig. 6 is a block diagram showing an example configuration of an embodiment of an encoding device to which the present disclosure is applied.

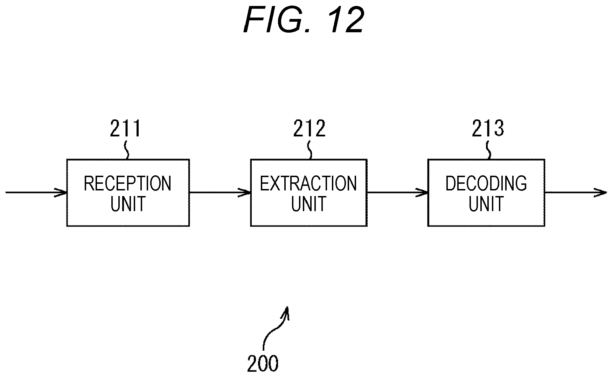

An encoding device 100 shown in Fig. 6 includes a setting unit 111, an encoding unit 112, and a transmission unit 113, and encodes images by a method compliant with HEVC. For example, the encoding device 100 can be configured as an imaging device by including an imaging unit. The encoding device 100, together with the later described decoding device 200 shown in Fig. 12, can form a communication system.

The setting unit 111 sets parameter sets such as a VPS, an SPS, a PPS, a VUI, and an SEI, and various headers. At that time, the setting unit 111 sets constrained_intra_pred_flag = 1 in the picture header. Note that constrained_intra_pred_flag is not necessarily set in the picture header, but may be set in any kind of header such as a slice header, or a parameter set such as a VPS, an SPS, a PPS, a VUI, or an SEI. The setting unit 111 supplies the set parameter sets to the encoding unit 112.

A frame-based image is input to the encoding unit 112. By referring to the parameter sets and the various headers supplied from the setting unit 111, the encoding unit 112 encodes the input image by a method compliant with HEVC. The encoding unit 112 generates an encoded stream from the encoded data obtained as a result of the encoding and from the parameter sets and the various headers, and supplies the encoded stream to the transmission unit 113.

The transmission unit 113 transmits the encoded stream supplied from the encoding unit 112 to a decoding device that will be described later.

### <Example Configuration of the Encoding Unit>

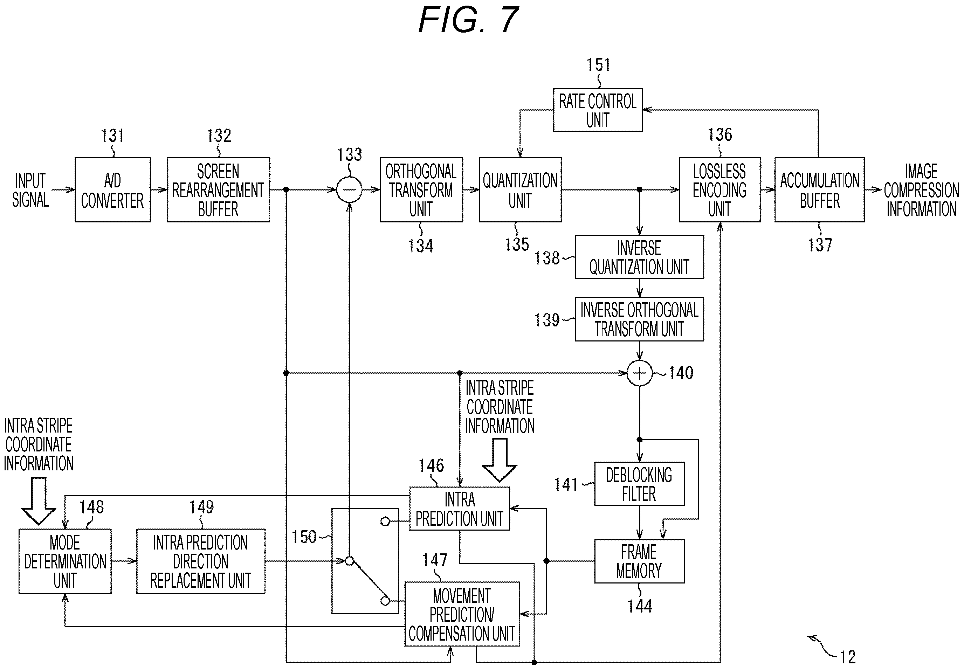

Fig. 7 is a block diagram showing an example configuration of the encoding unit 112 shown in Fig. 6.

The encoding unit 112 shown in Fig. 7 includes an A/D converter 131, a screen rearrangement buffer 132, an arithmetic operation unit 133, an orthogonal transform unit 134, a quantization unit 135, a lossless encoding unit 136, an accumulation buffer 137, an inverse quantization unit 138, an inverse orthogonal transform unit 139, and an addition unit 140. The encoding unit 112 also includes a deblocking filter 141, a frame memory 144, an intra prediction unit 146, a motion prediction/compensation unit 147, a mode determination unit (a prediction mode determination unit) 148, an intra prediction direction replacement unit 149, a selector 150, and a rate control unit 151.

The A/D converter 131 of the encoding unit 112 performs A/D conversion on a frame-based image that is input as the current object to be encoded. The A/D converter 131 outputs an image that is a converted digital signal to the screen rearrangement buffer 132, and stores the image into the screen rearrangement buffer 132.

The screen rearrangement buffer 132 rearranges the frames of the image stored in displaying order, so that the frames of the image are arranged in encoding order in accordance with the GOP structure. The screen rearrangement buffer 132 supplies the rearranged image to the arithmetic operation unit 133, the intra prediction unit 146, and the motion prediction/compensation unit 147.

The arithmetic operation unit 133 performs encoding by subtracting a predicted image supplied from the selector 150, from the image supplied from the screen rearrangement buffer 132. The arithmetic operation unit 133 outputs the resultant image as residual error information (a difference) to the orthogonal transform unit 134. Note that, in a case where any predicted image is not supplied from the mode determination unit 48, the arithmetic operation unit 133 outputs an image read from the screen rearrangement buffer 132 as the residual error information to the orthogonal transform unit 134.

The orthogonal transform unit 134 performs an orthogonal transform process on the residual error information supplied from the arithmetic operation unit 133 for each TU. The orthogonal transform unit 134 supplies an orthogonal transform result to the quantization unit 135 after the orthogonal transform process.

The quantization unit 135 quantizes the orthogonal transform result supplied from the orthogonal transform unit 134. The quantization unit 135 supplies the quantized value obtained as a result of the quantization to the lossless encoding unit 136.

The lossless encoding unit 136 acquires, from the intra prediction unit 146, information indicating the optimum intra prediction mode (the information will be hereinafter referred to as the intra prediction mode information). The lossless encoding unit 136 also acquires, from the motion prediction/compensation unit 147, information indicating the optimum inter prediction mode (the information will be hereinafter referred to as the inter prediction mode information), a motion vector, information for identifying a reference image, and the like.

The lossless encoding unit 136 performs lossless encoding, such as variable-length encoding (context-adaptive variable length coding (CAVLC) or the like, for example) or arithmetic encoding (context-adaptive binary arithmetic coding (CABAC) or the like, for example), on the quantized value supplied from the quantization unit 135.

The lossless encoding unit 136 also performs lossless encoding on encoding information relating to encoding, which are the intra prediction mode information or the inter prediction mode information, the motion vector, and the information for identifying a reference image. The lossless encoding unit 136 supplies the accumulation buffer 137 with the encoding information and the quantized value subjected to the lossless encoding as the encoded data to be stored.

The accumulation buffer 137 temporarily stores the encoded data supplied from the lossless encoding unit 136. The accumulation buffer 137 also supplies the stored encoded data, together with the parameter sets and the various headers supplied from the setting unit 111 shown in Fig. 6, as an encoded stream to the transmission unit 113.

The quantized value that is output from the quantization unit 135 is also input to the inverse quantization unit 138. The inverse quantization unit 138 inversely quantizes the quantized value. The inverse quantization unit 138 supplies the orthogonal transform result obtained as a result of the inverse quantization to the inverse orthogonal transform unit 139.

The inverse orthogonal transform unit 139 performs an inverse orthogonal transform process on the orthogonal transform result supplied from the inverse quantization unit 138 for each TU. The inverse orthogonal transform is performed by inverse discrete cosine transform (IDCT) or inverse discrete sine transform (IDST), for example. The inverse orthogonal transform unit 139 supplies the residual error information obtained as a result of the inverse orthogonal transform process to the addition unit 140.

The addition unit 140 adds the residual error information supplied from the inverse orthogonal transform unit 139 to the predicted image supplied from the selector 150, to perform decoding. The addition unit 140 supplies the decoded image to the deblocking filter 141 and the frame memory 144.

The deblocking filter 141 performs an adaptive deblocking filtering process on the decoded image supplied from the addition unit 140, to remove block distortion. The resultant image is supplied to the frame memory 144.

The frame memory 144 stores the image supplied from the deblocking filter 141 and the image supplied from the addition unit 140. An image adjacent to a prediction unit (PU) among the images that are stored in the frame memory 144 and have not been subjected to any filtering process is supplied as a peripheral image to the intra prediction unit 146. Meanwhile, an image that is stored in the frame memory 1144 and has been subjected to a filtering process is output as a reference image to the motion prediction/compensation unit 147.

Using the peripheral image that has been read from the frame memory 144, the intra prediction unit 146 performs an intra prediction process in all candidate intra prediction modes for each PU.

On the basis of the image read from the screen rearrangement buffer 132 and the predicted images generated as a result of the intra prediction process, the intra prediction unit 146 also calculates cost function values of all the candidate intra prediction modes. The intra prediction unit 146 then determines the optimum intra prediction mode that is the intra prediction mode with the smallest cost function value.

The intra prediction unit 146 supplies the predicted image generated in the optimum intra prediction mode and the corresponding cost function value to the mode determination unit 148. In a case where the predicted image generated in the optimum intra prediction mode is selected by the selector 150, the intra prediction unit 146 supplies the intra prediction mode information to the lossless encoding unit 136. Note that an intra prediction mode is a mode indicating the size of each PU, a direction of prediction, and the like.

The motion prediction/compensation unit 147 performs a motion prediction/compensation process in all candidate inter prediction modes for each PU. Specifically, the motion prediction/compensation unit 147 detects, for each PU, motion vectors of all the candidate inter prediction modes, on the basis of the image supplied from the screen rearrangement buffer 132 and the reference image read from the frame memory 144. The motion prediction/compensation unit 147 then performs, for each PU, a compensation process on the reference image on the basis of the motion vectors, and generates predicted images.

At this point, the motion prediction/compensation unit 147 calculates cost function values of all the candidate inter prediction modes on the basis of the image supplied from the screen rearrangement buffer 132 and the predicted images, and determines the optimum inter prediction mode that is the inter prediction mode with the smallest cost function value. The motion prediction/compensation unit 147 then supplies the cost function value of the optimum inter prediction mode and the corresponding predicted image to the mode determination unit 148. In a case where the predicted image generated in the optimum inter prediction mode is selected by the selector 150, the motion prediction/compensation unit 147 also outputs the inter prediction mode information, the corresponding motion vector, the information for identifying the reference image, and the like to the lossless encoding unit 136. Note that an inter prediction mode is a mode indicating the size of each PU and the like.

The mode determination unit 48 performs a mode determination process according to the present technology, on the basis of intra stripe coordinate information supplied from outside the encoding unit 112 and the coordinates of the current block. In other words, in a case where the mode determination unit 48 determines that the current block is in the intra stripe 10, the mode determination unit 48 fixes the mode to intra prediction. If the mode determination unit 48 determines that the current block is not in the intra stripe 10, on the other hand, the mode determination unit 48 determines whether or not the current block is on a boundary with the intra stripe 10.

In a case where the mode determination unit 148 determines that the current block is on a boundary with the intra stripe 10, the mode determination unit 148 fixes the mode to inter prediction. In a case where the mode determination unit 48 determines that the current block is not a boundary with the intra stripe 10, on the other hand, the mode determination unit 48 performs mode determination based on the cost function values. In other words, on the basis of the cost function values supplied from the intra prediction unit 46 and the motion prediction/compensation unit 147, the mode determination unit 148 determines the optimum prediction mode that is the optimum intra prediction mode or the optimum inter prediction mode, whichever has the smaller cost function value.

Note that, in a case where intra prediction (the optimum intra prediction mode) is selected, the mode determination unit 48 determines whether or not a direction of prediction using the pixels of a peripheral inter block is selected. Specifically, since constrained_intra_pred_flag = 1 is set in the picture header by the setting unit 111 shown in Fig. 6, in a case where it is determined that a direction of prediction using the pixels of a peripheral inter block is selected, the intra prediction direction replacement unit 149 replaces the prediction direction with a direction in which pixels not belonging to any inter block are used. The selector 150 then selects an image predicted in the intra prediction direction after the replacement, and supplies the selected predicted image to the arithmetic operation unit 133.

In a case where intra prediction (the optimum intra prediction mode) is selected, but any direction of prediction using the pixels of a peripheral inter block is not selected, on the other hand, the intra-predicted image generated by the intra prediction unit 146 is selected by the selector 150, and is supplied to the arithmetic operation unit 133. In a case where an inter image is selected, the inter-predicted image generated by the motion prediction/compensation unit 147 is selected by the selector 150, and is supplied to the arithmetic operation unit 133.

Note that, ideally, the intra stripe coordinate information is also input to the intra prediction unit 146. Therefore, the prediction direction is ideally limited to a direction of prediction not using the pixels near a selected inter block, after a result is obtained from determination as to whether determined peripheral information (Intra/Inter) can be used by the intra prediction unit 146 to generate a predicted image. However, this is difficult in a system required to perform real-time processing.

Therefore, other than the inside of and the boundaries with the intra stripe 10, the intra prediction unit 146 searches for an intra prediction direction, with the use of the peripheral pixels in prediction being allowed (or prohibited). In a case where the use of the peripheral pixels is prohibited in intra prediction (all the peripheral blocks are inter blocks), any block for intra prediction direction replacement is not necessary. In a case where the use of the peripheral pixels is allowed (the peripheral blocks are intra blocks), the mode determination unit 148 manages the peripheral history, and determines the relationship between the prediction direction input from the intra prediction unit 146 and the inter blocks 31L and 31R. In a case where a direction of prediction using predictions from the inter blocks 31L and 31R is selected, a process is performed to replace the prediction direction with the closest direction of prediction not using the pixels of any inter block.

On the basis of the encoded data stored in the accumulation buffer 137, the rate control unit 151 controls the quantization operation rate of the quantization unit 135 so as not to cause an overflow or underflow.

### <Description of a Process To Be Performed by the Encoding Device>

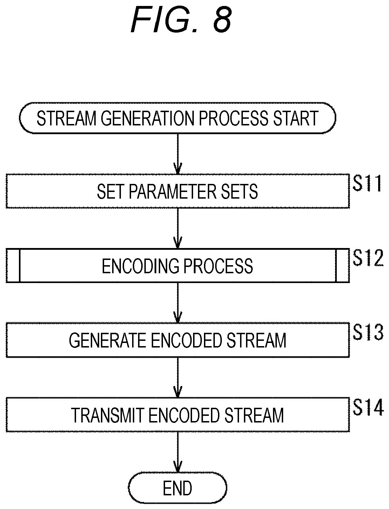

Fig. 8 is a flowchart for explaining a stream generation process to be performed by the encoding device 100 shown in Fig. 6.

In step S11 in Fig. 8, the setting unit 111 of the encoding device 100 sets parameter sets such as a VPS and an SPS, and various headers. At that time, the setting unit 111 sets constrained_intra_pred_flag = 1 in the picture header. The setting unit 111 supplies the set parameter sets and various headers to the encoding unit 112.

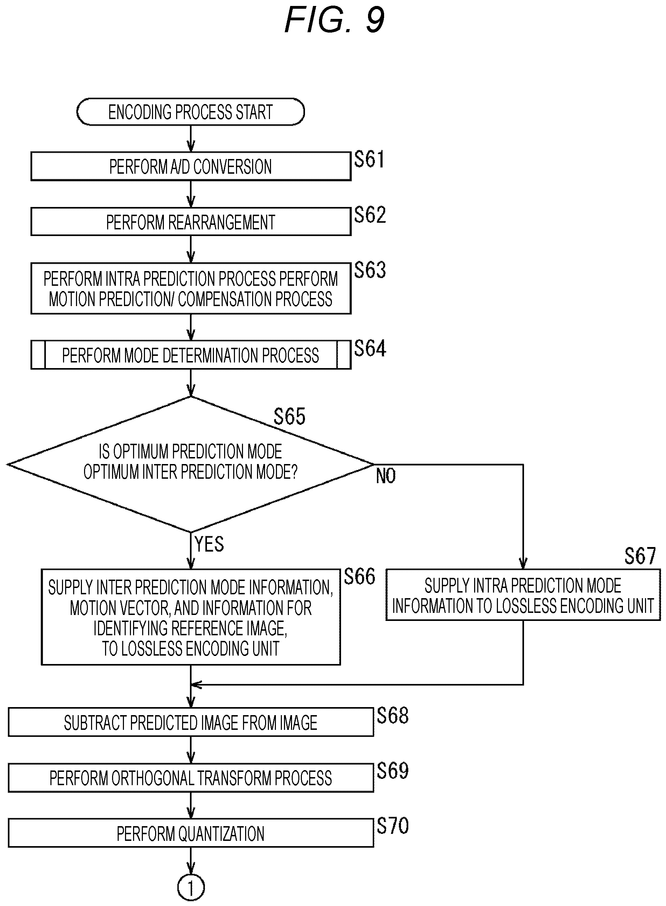

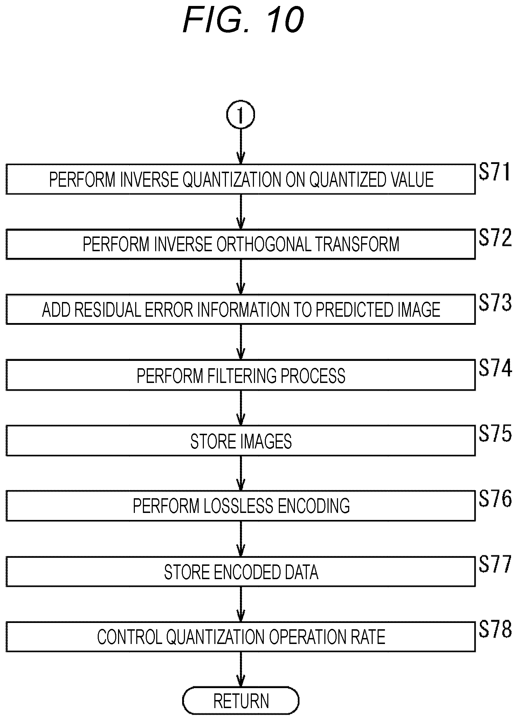

In step S12, the encoding unit 112 performs an encoding process to encode a frame-based image input from the outside by a method compliant with HEVC. This encoding process will be described later in detail, with reference to Figs. 9 and 10.

In step S13, the accumulation buffer 137 (Fig. 7) of the encoding unit 112 generates an encoded stream from the parameter sets and various headers supplied from the setting unit 111 and stored encoded data, and supplies the encoded stream to the transmission unit 113.

In step S14, the transmission unit 113 transmits the encoded stream supplied from the setting unit 111 to a decoding device 200 that will be described later, and the process then comes to an end.

Next, Figs. 9 and 10 are a flowchart for explaining in detail the encoding process in step S12 in Fig. 8.

In step S61 in Fig. 9, the A/D converter 131 (Fig. 7) of the encoding unit 112 performs A/D conversion on the frame-based image that has been input as the current object to be encoded. The A/D converter 131 outputs an image that is a converted digital signal to the screen rearrangement buffer 132, and stores the image into the screen rearrangement buffer 132.

In step S62, the screen rearrangement buffer 132 rearranges the frames of the image stored in displaying order, so that the frames of the image are arranged in encoding order in accordance with the GOP structure. The screen rearrangement buffer 132 supplies the rearranged frame-based image to the arithmetic operation unit 133, the intra prediction unit 146, and the motion prediction/compensation unit 147.

In step S63, the intra prediction unit 146 performs an intra prediction process in all candidate intra prediction modes for each PU. On the basis of the image read from the screen rearrangement buffer 132 and the predicted images generated as a result of the intra prediction process, the intra prediction unit 146 also calculates cost function values of all the candidate intra prediction modes. The intra prediction unit 146 then determines the optimum intra prediction mode that is the intra prediction mode with the smallest cost function value. The intra prediction unit 146 supplies the cost function value corresponding to the optimum intra prediction mode, to the mode determination unit 148.

Meanwhile, the motion prediction/compensation unit 147 performs a motion prediction/compensation process in all candidate inter prediction modes for each PU. The motion prediction/compensation unit 147 also calculates cost function values of all the candidate inter prediction modes on the basis of the image supplied from the screen rearrangement buffer 132 and the predicted images, and determines the optimum inter prediction mode that is the inter prediction mode with the smallest cost function value. The motion prediction/compensation unit 147 then supplies the cost function value of the optimum inter prediction mode to the mode determination unit 148.

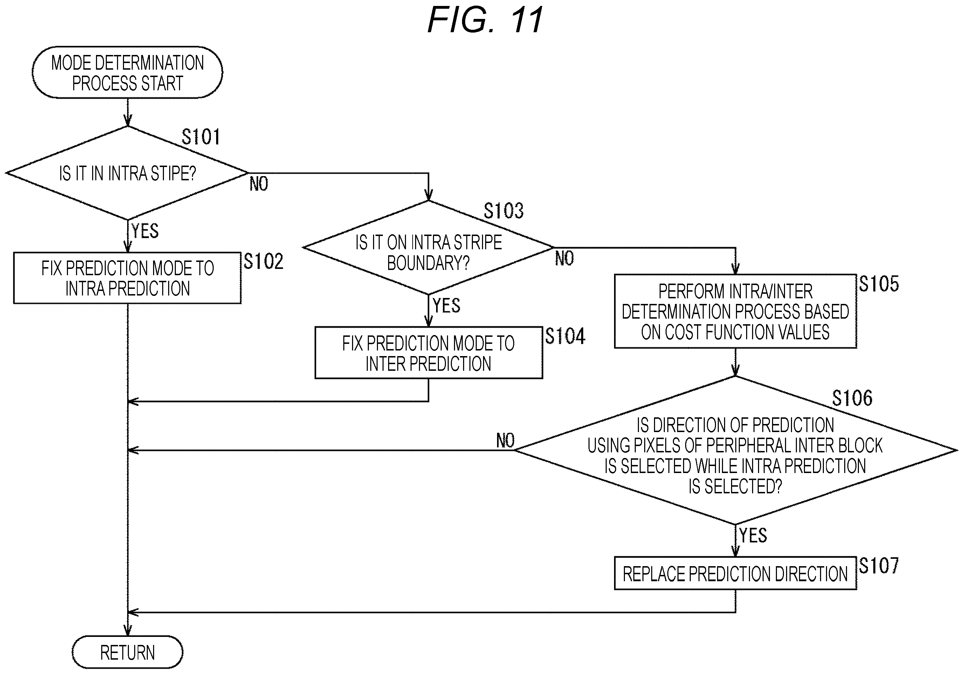

In step S64, the mode determination unit 148 performs a mode determination process. This mode determination process will be described later with reference to Fig. 11. On the basis of a result of determination based on intra stripe information, either the optimum intra prediction mode or the optimum inter prediction mode is determined to be the optimum prediction mode through the process in step S64. Note that, in a case where intra prediction (the optimum intra prediction mode) is selected, the mode determination unit 148 determines whether or not a direction of prediction using the pixels of a peripheral inter block is selected. Specifically, since constrained_intra_pred_flag = 1 is set in the picture header by the setting unit 111 shown in Fig. 6, in a case where it is determined that a direction of prediction using the pixels of a peripheral inter block is selected, the prediction direction is replaced with a direction in which pixels not belonging to any inter block are used. The selector 150 then selects an image predicted in the intra prediction direction after the replacement, and supplies the selected predicted image to the arithmetic operation unit 133.

In step S65, the intra prediction unit 146 and the motion prediction/compensation unit 147 determine whether the optimum prediction mode is the optimum inter prediction mode. If the optimum prediction mode is determined to be the optimum inter prediction mode in step S65, the process moves on to step S66.

In step S66, the motion prediction/compensation unit 147 supplies the lossless encoding unit 136 with the inter prediction mode information, the motion vector, and the information for identifying the reference image, and the process moves on to step S68.

If the optimum prediction mode is determined not to be the optimum inter prediction mode in step S65, or if the optimum prediction mode is the optimum intra prediction mode, on the other hand, the process moves on to step S67. In step S67, the intra prediction unit 146 supplies the intra prediction mode information to the lossless encoding unit 136, and the process moves on to step S68.

In step S68, the arithmetic operation unit 133 performs encoding by subtracting the predicted image supplied from the selector, from the image supplied from the screen rearrangement buffer 132. The arithmetic operation unit 133 outputs the resultant image as residual error information to the orthogonal transform unit 134.

In step S69, the orthogonal transform unit 134 performs an orthogonal transform process on the residual error information for each TU. The orthogonal transform unit 134 supplies an orthogonal transform result to the quantization unit 135 after the orthogonal transform process.

In step S70, the quantization unit 135 quantizes the orthogonal transform result supplied from the orthogonal transform unit 134. The quantization unit 135 supplies the quantized value obtained as a result of the quantization to the lossless encoding unit 136 and the inverse quantization unit 138.

In step S71, the inverse quantization unit 138 inversely quantizes the quantized value supplied from the quantization unit 135. The inverse quantization unit 138 supplies the orthogonal transform result obtained as a result of the inverse quantization to the inverse orthogonal transform unit 139.

In step S72, the inverse orthogonal transform unit 139 performs an inverse orthogonal transform process on the orthogonal transform result supplied from the inverse quantization unit 138 for each TU. The inverse orthogonal transform unit 139 supplies the residual error information obtained as a result of the inverse orthogonal transform process to the addition unit 140.

In step S73, the addition unit 140 adds the residual error information supplied from the inverse orthogonal transform unit 139 to the predicted image supplied from the mode determination unit 148, to perform decoding. The addition unit 140 supplies the decoded image to the deblocking filter 141 and the frame memory 144.

In step S74, the deblocking filter 141 performs a deblocking filtering process on the decoded image supplied from the addition unit 140. The deblocking filter 141 supplies the resultant image to the frame memory 144.

In step S75, the frame memory 144 stores the image supplied from the deblocking filter 141 and the image supplied from the addition unit 140. An image adjacent to a PU among the images that are stored in the frame memory 144 and have not been subjected to any filtering process is supplied as a peripheral image to the intra prediction unit 146. Meanwhile, an image that is stored in the frame memory 144 and has been subjected to a filtering process is output as a reference image to the motion prediction/compensation unit 147.

In step S76, the lossless encoding unit 136 performs lossless encoding on the quantized value supplied from the quantization unit 135. Note that, at this point of time, the lossless encoding unit 136 performs lossless encoding on the encoding information, which is the intra prediction mode information or the inter prediction mode information, the motion vector, and the information for identifying the reference image. The lossless encoding unit 136 then generates encoded data from the encoding information subjected to the lossless encoding and the quantized value subjected to the lossless encoding, and supplies the encoded data to the accumulation buffer 137.

In step S77, the accumulation buffer 137 temporarily stores the encoded data supplied from the lossless encoding unit 136.

In step S78, on the basis of the encoded data stored in the accumulation buffer 137, the rate control unit 151 controls the quantization operation rate of the quantization unit 135 so as not to cause an overflow or underflow. The process then returns to step S12 in Fig. 8, and moves on to step S13.

Referring now to the flowchart in Fig. 11, the mode determination process in step S64 in Fig. 9 is described.

In step S101, the mode determination unit 48 determines whether or not the current block is in the intra stripe 10, on the basis of intra stripe information supplied from outside the encoding unit 112 and the coordinates of the current block.

If the current block is determined to be in the intra stripe 10 in step S101, the process moves on to step S102. In step S102, the mode determination unit 48 fixes the prediction mode to intra prediction. In this case, the intra prediction direction replacement unit 149 causes the selector 150 to select intra prediction. As a result, the intra-predicted image generated by the intra prediction unit 146 is selected by the selector 150, and is supplied to the arithmetic operation unit 133.

If the current block is determined to be in the intra stripe 10 in step S101, the process moves on to step S103. In step S103, the mode determination unit 48 determines whether or not the current block is on an intra stripe boundary. If the current block is determined to be on an intra stripe boundary in step S103, the process moves on to step S104.

In step S104, the mode determination unit 148 fixes the prediction mode to inter prediction. In this case, the intra prediction direction replacement unit 149 causes the selector 150 to select inter prediction. As a result, the inter-predicted image generated by the motion prediction/compensation unit 147 is selected by the selector 150, and is supplied to the arithmetic operation unit 133.

If the current block is determined not to be on an intra stripe boundary in step S103, the process moves on to step S105. In step S105, the mode determination unit 148 performs a conventional intra/inter determination process based on cost function values.

In other words, on the basis of the cost function values supplied from the intra prediction unit 146 and the motion prediction/compensation unit 147, the mode determination unit 148 determines the optimum prediction mode that is the optimum intra prediction mode or the optimum inter prediction mode, whichever has the smaller cost function value.

In step S106, in a case where intra prediction is selected, the mode determination unit 148 refers to the optimum intra prediction mode, and determines whether or not a direction of prediction using the pixels of a peripheral inter block is selected. In this case, processing corresponding to constrained_intra_pred_flag = 1 is performed in the picture header.

In step S106, if inter prediction is selected, or if it is determined that any direction of prediction using the pixels of a peripheral inter block is not selected while intra prediction is selected, the process moves on to step S107. In step S107, the intra prediction direction replacement unit 149 causes the selector 150 to select inter prediction or intra prediction. As a result, the inter-predicted image generated by the motion prediction/compensation unit 147 or the intra-predicted image generated by the intra prediction unit 146 is selected by the selector 150, and is supplied to the arithmetic operation unit 133.

If it is determined in step S106 that a direction of prediction using the pixels of a peripheral inter block is selected while intra prediction is selected, on the other hand, the process moves on to step S107. In step S107, the intra prediction direction replacement unit 149 replaces the prediction direction with a direction of prediction using pixels not belonging to any inter block. The image predicted in the direction of intra prediction after the replacement is selected by the selector 150, and is supplied to the arithmetic operation unit 133.

Note that, in the screen 1, all the regions other than the intra stripe 10 may be formed with inter blocks.

### <Example Configuration of a Decoding Device>

Fig. 12 is a block diagram showing an example configuration of an embodiment of a decoding device to which the present disclosure is applied. The decoding device decodes an encoded stream transmitted from the encoding device 100 shown in Fig. 7.

A decoding device 200 in Fig. 12 includes a reception unit 211, an extraction unit 212, and a decoding unit 213.

The reception unit 211 of the decoding device 200 receives an encoded stream transmitted from the encoding device 100 shown in Fig. 7, and supplies the encoded stream to the extraction unit 212.

The extraction unit 212 extracts parameter sets, such as a VPS and an SPS, various headers, and encoded data from the encoded stream supplied from the reception unit 211, and supplies the parameter sets, the various headers, and the encoded data to the decoding unit 213.

The decoding unit 213 decodes the encoded data supplied from the extraction unit 212, by a method compliant with HEVC. In doing so, the decoding unit 213 also refers to the parameter sets and the various headers supplied from the extraction unit 212 as necessary. Note that, on the decoding side, there is no particular need to refer to constrained_intra_pred_flag in the picture header. The decoding unit 213 outputs the image obtained as a result of the decoding.

### <Example Configuration of the Decoding Unit>

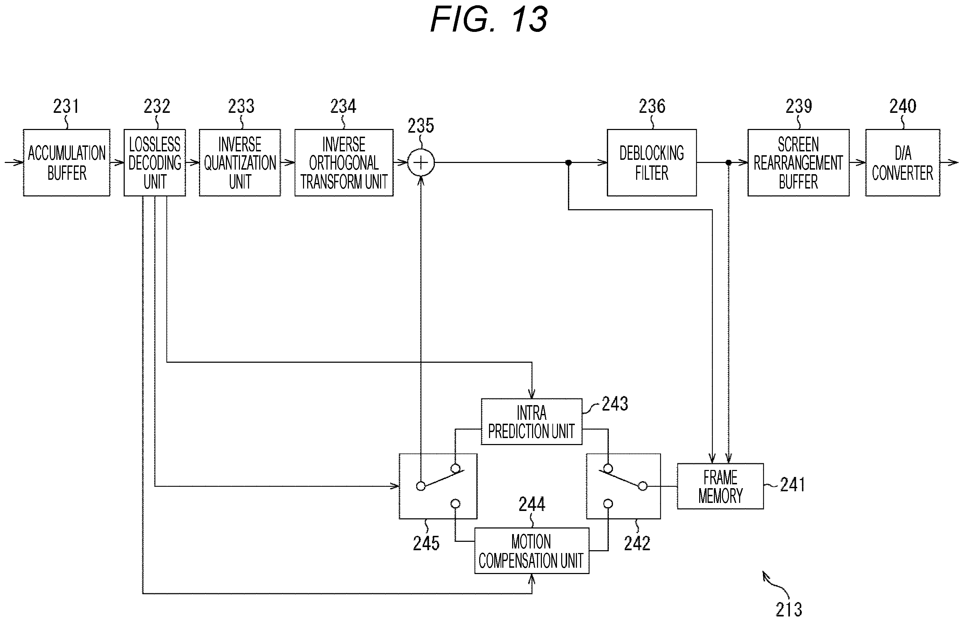

Fig. 13 is a block diagram showing an example configuration of the decoding unit 213 shown in Fig. 12.

The decoding unit 213 shown in Fig. 13 includes an accumulation buffer 231, a lossless decoding unit 232, an inverse quantization unit 233, an inverse orthogonal transform unit 234, an addition unit 235, a deblocking filter 236, and a screen rearrangement buffer 239. The decoding unit 213 also includes a D/A converter 240, a frame memory 241, a switch 242, an intra prediction unit 243, a motion compensation unit 244, and a switch 245.

The accumulation buffer 231 of the decoding unit 213 receives and stores encoded data from the extraction unit 212 shown in Fig. 12. The accumulation buffer 231 supplies the stored encoded data to the lossless decoding unit 232.

The lossless decoding unit 232 obtains a quantized value and encoding information by performing lossless decoding, such as variable-length decoding or arithmetic decoding, on the encoded data supplied from the accumulation buffer 231. The lossless decoding unit 232 supplies the quantized value to the inverse quantization unit 233. The lossless decoding unit 232 also supplies intra prediction mode information and the like as the encoding information to the intra prediction unit 243. The lossless decoding unit 232 also supplies the motion compensation unit 244 with a motion vector, inter prediction mode information, information for identifying a reference image, and the like.

The lossless decoding unit 232 further supplies the switch 245 with the intra prediction mode information or the inter prediction mode information as the encoding information.

The inverse quantization unit 233, the inverse orthogonal transform unit 234, the addition unit 235, the deblocking filter 236, the frame memory 241, the intra prediction unit 243, and the motion compensation unit 244 perform operations similar to those performed by the inverse quantization unit 138, the inverse orthogonal transform unit 139, the addition unit 140, the deblocking filter 141, the frame memory 144, the intra prediction unit 146, and the motion prediction/compensation unit 147 shown in Fig. 8, respectively, so as to decode images.

Specifically, the inverse quantization unit 233 is designed in a manner similar to that for the inverse quantization unit 138 shown in Fig. 8. The inverse quantization unit 233 inversely quantizes a quantized value from the lossless decoding unit 232 for each TU. The inverse quantization unit 233 supplies the obtained orthogonal transform result to the inverse orthogonal transform unit 234.

The inverse orthogonal transform unit 234 is designed in a manner similar to that for the inverse orthogonal transform unit 139 shown in Fig. 8. The inverse orthogonal transform unit 234 performs an inverse orthogonal transform process on the orthogonal transform result supplied from the inverse quantization unit 233. The inverse orthogonal transform unit 234 supplies the residual error information obtained as a result of the inverse orthogonal transform process to the addition unit 235.

The addition unit 235 performs decoding by adding the residual error information supplied from the inverse orthogonal transform unit 234 to a predicted image supplied from the switch 245. The addition unit 235 supplies the decoded image to the deblocking filter 236 and the frame memory 241.

The deblocking filter 236 performs an adaptive deblocking filtering process on the image supplied from the addition unit 235, and supplies the resultant image to the frame memory 141 and the screen rearrangement buffer 239.

The screen rearrangement buffer 239 stores the image supplied from the deblocking filter 236 frame by frame. The screen rearrangement buffer 239 rearranges the frames of the stored image in the original displaying order, instead of the encoding order, and supplies the rearranged image to the D/A converter 240.

The D/A converter 240 performs D/A conversion on the frame-based image supplied from the screen rearrangement buffer 239, and outputs the image.

The frame memory 241 stores the image supplied from the deblocking filter 236 and the image supplied from the addition unit 235. An image adjacent to a PU among the images that are stored in the frame memory 241 and have not been subjected to any filtering process is supplied as a peripheral image to the intra prediction unit 243 via the switch 242. Meanwhile, an image that is stored in the frame memory 241 and has been subjected to a filtering process is output as a reference image to the motion compensation unit 244 via the switch 242.

Using the peripheral image that has been read from the frame memory 241 via the switch 242, the intra prediction unit 243 performs an intra prediction process in the optimum intra prediction mode indicated by the intra prediction mode information supplied from the lossless decoding unit 232. The intra prediction unit 243 supplies the resultant predicted image to the switch 245.

From the frame memory 241 via the switch 242, the motion compensation unit 244 reads the reference image identified by the information supplied from the lossless decoding unit 232 for identifying the reference image. Using the motion vector and the reference image supplied from the lossless decoding unit 232, the motion compensation unit 244 performs a motion compensation process in the optimum inter prediction mode indicated by the inter prediction mode information supplied from the lossless decoding unit 232. The motion compensation unit 244 supplies the resultant predicted image to the switch 245.

In a case where the intra prediction mode information is supplied from the lossless decoding unit 232, the switch 245 supplies the predicted image supplied from the intra prediction unit 146, to the addition unit 235. In a case where the inter prediction mode information is supplied from the lossless decoding unit 232, on the other hand, the switch 245 supplies the predicted image supplied from the motion compensation unit 244, to the addition unit 235.

### <Description of a Process To Be Performed by the Decoding Device>

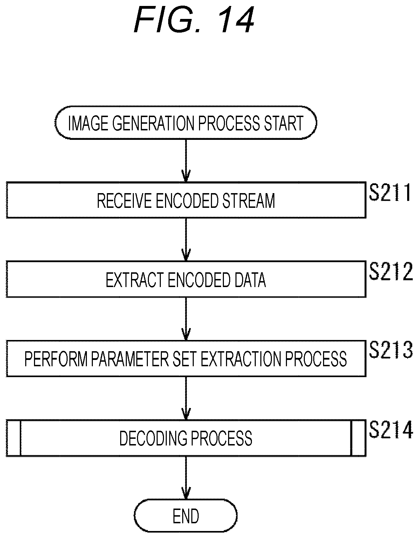

Fig. 14 is a flowchart for explaining an image generation process to be performed by the decoding device 200 shown in Fig. 12.

In step S211 in Fig. 14, the reception unit 211 of the decoding device 200 receives an encoded stream transmitted from the encoding device 100 shown in Fig. 7, and supplies the encoded stream to the extraction unit 212.

In step S212, the extraction unit 212 extracts encoded data from the encoded stream supplied from the reception unit 211, and supplies the encoded data to the decoding unit 213.

In step S213, the extraction unit 212 extracts parameter sets, such as a VPD and an SPS, and various headers from the encoded stream supplied from the reception unit 211, and supplies the parameter sets and the various headers to the decoding unit 213.

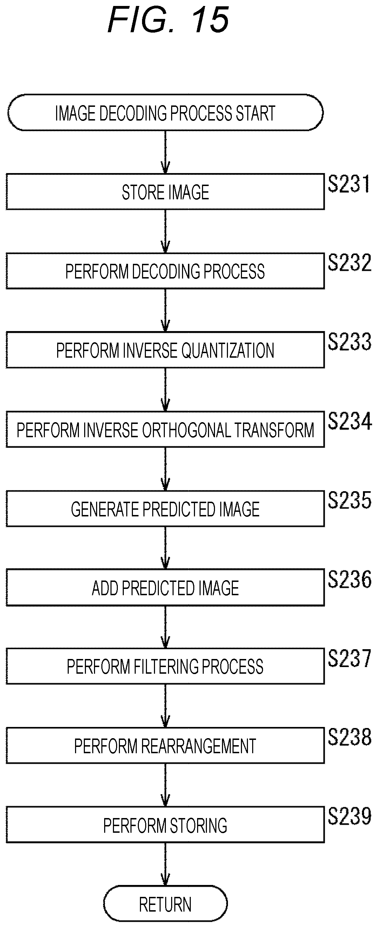

In step S214, using the parameter sets and the various headers supplied from the extraction unit 212 as necessary, the decoding unit 213 performs a decoding process to decode the encoded data supplied from the extraction unit 212 by a method compliant with HEVC. This decoding process will be described later in detail with reference to Fig. 15. The process then comes to an end.

Referring now to the flowchart in Fig. 15, the decoding process in step S214 in Fig. 14 is described in detail.

When the decoding process is started, the accumulation buffer 231 in step S231 stores the encoded data to be supplied to the decoding unit 213. In step S232, the lossless decoding unit 232 performs a decoding process, to obtain quantized data.

In step S233, the inverse quantization unit 233 performs inverse quantization on the quantized data obtained through the process in step S232, to obtain an orthogonal transform coefficient. In step S234, the inverse orthogonal transform unit 234 performs inverse orthogonal transform on the orthogonal transform coefficient obtained through the process in step S233, to obtain restored residual error data.

In step S235, the intra prediction unit 243, the motion compensation unit 244, and the switch 245 perform a prediction process in the prediction mode used in the encoding, to generate a predicted image. For example, in a case where the current PU (macroblock) to be processed is a PU subjected to intra prediction at the time of encoding, the intra prediction unit 243 generates an intra-predicted image, and the switch 245 selects the intra-predicted image as a predicted image. Further, in a case where the current PU to be processed is a PU subjected to inter prediction at the time of encoding, for example, the motion compensation unit 244 generates an inter-predicted image, and the switch 245 selects the inter-predicted image as a predicted image.

In step S236, the addition unit 235 adds the predicted image obtained through the process in step S235 to the restored residual error data obtained through the process in step S234, to obtain a reconstructed image.

In step S237, the deblocking filter 236 performs a filtering process such as deblocking filtering on the reconstructed image obtained through the process in step S236, to obtain a decoded image.

In step S238, the screen rearrangement buffer 239 performs rearrangement on the decoded image obtained through the process in step S237, to rearrange the frames in the original displaying order (the order before the screen rearrangement buffer 111 of the encoding device 100 performs the rearrangement).

In step S239, the frame memory 241 stores the decoded image obtained through the process in step S238. This decoded image is used as the reference image in inter prediction.

When the process in step S239 is completed, the image decoding process comes to an end.

Note that the units of processing in these processes may be any units, and are not necessarily the same as one another. Accordingly, the process in each step can be executed in parallel with the process or the like in another step, or the sequence of the processes may be changed.

### <2. Second Embodiment>

### <Another Method of Recovering from a Transmission Error>

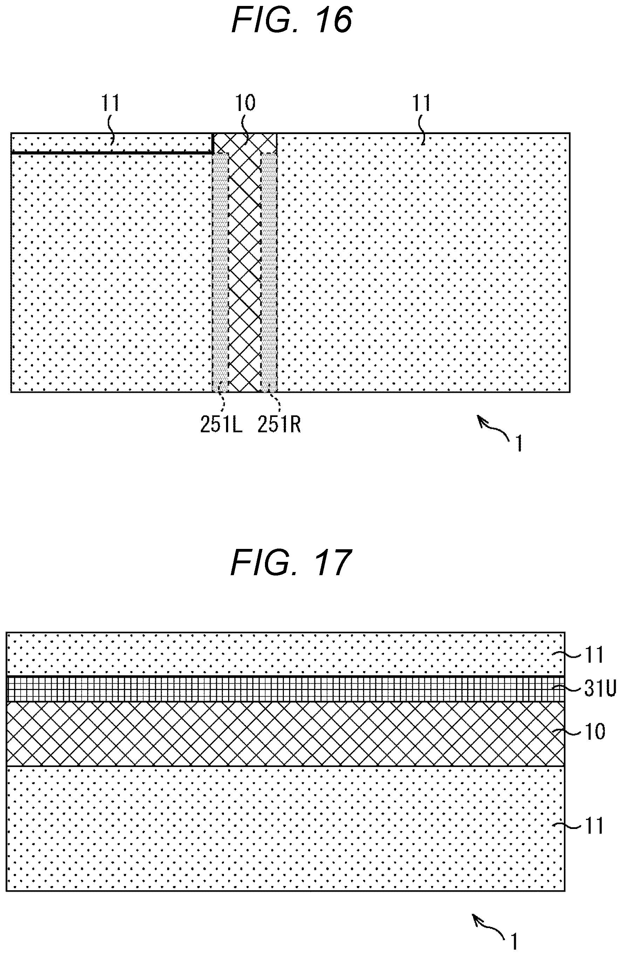

The objective to be achieved by the above described present technology is to prevent error propagation from the outside of the intra stripe 10 into the intra stripe 10. From this point of view, Fig. 16 shows an example case where constrained intra_pred_flag = 0.

In a case where constrained_intra_pred_flag = 0, when the position of the left side of the intra stripe 10 is not located at a screen edge, as shown in Fig. 16, a slice is cut at the start position of the intra stripe 10 as indicated by a thick line.

This is because the left pixels are invariably used in accordance with the standards, unless a slice boundary is formed. Therefore, in a case where there is an error in a pixel on the boundary, the error is transmitted to the inside of the intra stripe 10. Further, in the example shown in Fig. 16, the direction of intra prediction of a block in contact with a boundary position of the mesh portion is limited to a direction of prediction prohibited from using the left pixel value in a left-side boundary portion 251L. In a right-side boundary portion 251R, it is limited to the direction of prediction prohibited from using the right pixel value.

In this manner, error propagation into the intra stripe 10 can be prevented. Note that there are no particular restrictions on the blocks outside the intra stripe 10.

### <Examples of Horizontal Stripes>

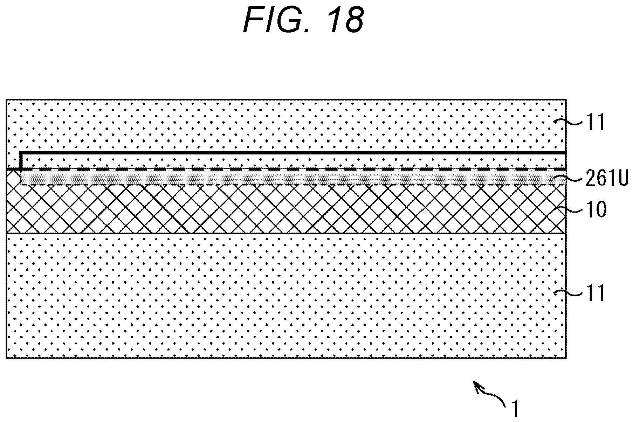

Fig. 17 is a diagram showing an example of horizontal stripes in a case where constrained_intra_pred_flag = 1. Fig. 18 is a diagram showing an example of horizontal stripes in a case where constrained_intra_pred_flag = 0.

As shown in the example in Fig. 17, the position of insertion of an inter block 31U in the screen 1 in a case where constrained_intra_pred_flag = 1 is only the upper boundary portion of the intra stripe 10. This is because there is no prediction from the future because processing is performed in the raster order.

As shown in the example in Fig. 18, in a case where constrained_intra_pred_flag = 0, the direction of prediction using the pixels on the upper side is prohibited only at an upper boundary portion 251U on the boundaries with the intra stripe 10 on the screen 1.

Also, as indicated by a thick solid line, at least one macroblock (meaning MB/CTU) needs to be a slice boundary. This is because, in a case where any slice boundary is not formed, the pixel values on the left side cannot be used, and an upper pixel is always used in accordance with the standards. As a slice boundary is formed, it is possible to switch slices at the portion indicated by a thick dashed line, to indicate that the upper pixels are Not Available. In a case where the upper side is on a slice boundary, pixel reference beyond the slice is prohibited according to the standards. In other words, regardless of whether there is a slice boundary or not, a similar prediction is made, with any upper pixel not being referred to.

As described above, according to the present technology, error propagation from the periphery into the intra stripe (intra block) in the GDR can be prevented. Accordingly, any error is not caused in the intra stripe, and the intra stripe circulates once while the reference surface recovered in the intra stripe through inter prediction is being used. In this manner, the screen can be reconstructed.

As described above, according to the present technology, error propagation in an image can be prevented. In other words, degradation of image quality can be prevented.

In the above example, a method compliant with HEVC is used as the encoding method. However, the present technology is not limited to the above, and some other encoding/decoding method can be used.

### <3. Third Embodiment>

### <Example Configuration of a Television Conference System>

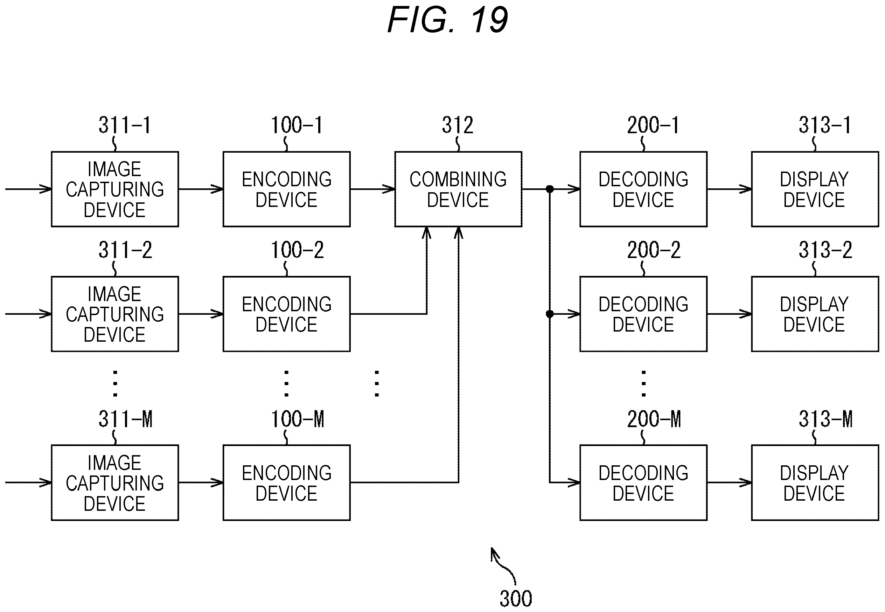

Fig. 19 is a block diagram showing an example configuration of an embodiment of a television conference system to which the present technology is applied.

A television conference system 300 in Fig. 19 includes image capturing devices 311-1 through 311-M, encoding devices 100-1 through 100-M, a combining device 312, decoding devices 200-1 through 200-M, and display devices 313-1 through 313-M. The television conference system 300 captures images of M persons who participate in a conference from different spots, and encodes, combines, decodes, and displays the images.

Specifically, the image capturing devices 311-1 through 311-M of the television conference system 300 are disposed at the respective spots of the M persons participating in the conference. The image capturing devices 311-1 through 311-M capture images of the persons participating in the conference, and supply the images to the encoding devices 100-1 through 100-M, respectively.

Each of the encoding devices 100-1 through 100-M is configured similarly to the encoding device 100 shown in Fig. 6. The encoding devices 100-1 through 100-M compress and encode the images supplied from the image capturing devices 311 independently for each tile, by a method compliant with HEVC. The encoding devices 100-1 through 100-M each transmit the encoded stream obtained as a result of the compression and encoding to the combining device 163.

The combining device 163 receives the encoded streams transmitted from the encoding devices 100-1 through 100-M. The combining device 312 combines the encoded data in the encoded streams. The combining device 312 adds an SPS, a PPS, a VUI, an APS, and the like to the encoded data obtained as a result of the combining, and thus, generates a combined stream. The combining device 312 transmits the combined stream to the decoding devices 200-1 through 200-M.

Each of the decoding devices 200-1 through 200-M is configured similarly to the decoding device 200 shown in Fig. 12. The decoding devices 200-1 through 200-M each receive the combined stream transmitted from the combining device 312. The decoding devices 200-1 through 200-M decode the combined stream independently for each tile, and supply the decoded images obtained as a result of the decoding to the display devices 313-1 through 313-M.

The display devices 313-1 through 313-M are disposed at the respective spots of the M persons participating in the conference. The display devices 313-1 through 313-M display the decoded images supplied from the decoding devices 200-1 through 200-M.

Note that, in the television conference system 300, the display devices 313-1 through 313-M are disposed at the respective spots of the M persons participating in the conference, but the display devices may be disposed at the spots of some of the M persons participating in the conference. Further, the decoded images may be displayed on a display device of a person not participating in the conference. Furthermore, the combining device 312 may not be provided, and, in that case, the encoded streams transmitted from the encoding devices 100-1 through 100-M are received.

In the television conference system 300 as described above, the present technology is applied to the encoding devices 100-1 through 100-M, so that error propagation from the periphery into the intra stripe (intra block) in the GDR can be prevented.

In the television conference system 300, there is no time to correct errors, for example, due to a low delay, but the present technology can prevent error propagation in an image. In other words, the present technology is effective in a low-delay television conference system, a network camera system, and the like.

### <4. Fourth Embodiment>

### <Data Unit for Information>

Each of the units of data (or target data) for setting the information relating to images and the information relating to encoding/decoding of images described above may be any appropriate unit, and is not limited to the above example. For example, these pieces of information may be set for each TU, PU, CU, LCU, sub-block, block, tile, slice, picture, sequence, or component, or may be directed to data of any of these data units. This data unit is of course set for each piece of information. That is, there is no need to set (or direct) all the information for each identical data unit. Note that these pieces of information may be stored at any location, and may be stored in the above described header of a data unit, a parameter set, or the like. Further, the information may be stored at a plurality of locations.

### <Encoding/Decoding>

Note that the present disclosure can be applied to image encoding devices and image decoding devices that are used when image information (bitstreams) compressed through orthogonal transform such as discrete cosine transform and motion compensation is received via a network medium such as satellite broadcasting, cable television, the Internet, or a portable telephone apparatus, as in HEVC or the like, for example. The present disclosure can also be applied to image encoding devices and image decoding devices that are used when compressed image information is processed on a storage medium such as an optical or magnetic disk or a flash memory.

### <Fields of Application of the Present Technology>

A system, an apparatus, a processing unit, and the like to which the present technology is applied can be used in any appropriate field such as transportation, medical care, crime prevention, agriculture, the livestock industry, mining, beauty care, factories, household appliances, meteorology, or nature observation, for example.

For example, the present technology can be applied to a system or a device that transmits an image provided for viewing. The present technology can also be applied to a system or a device to be used in transportation, for example. Further, the present technology can be applied to a system or a device to be used for security, for example. The present technology can also be applied to a system or a device to be used in sports, for example. Further, the present technology can be applied to a system or a device to be used in agriculture, for example. The present technology can also be applied to a system or a device to be used in the livestock industry, for example. Further, the present technology can also be applied to a system or a device that monitors nature conditions such as volcanoes, forests, or the ocean, for example. The present technology can also be applied to a meteorological observation system or a meteorological observation device that observes weather, temperature, humidity, wind velocity, sunlight hours, and the like, for example. Further, the present technology can be applied to a system, a device, or the like that observes the ecology of wildlife such as birds, fish, reptiles, amphibians, mammals, insects, or plants, for example.

### <Application to a Multiview Image Encoding/Decoding System>

The series of processes described above can be applied to a multiview image encoding/decoding system that performs encoding/decoding of a multiview image including images of a plurality of viewpoints (views). In that case, the present technology is applied to encoding/decoding of each viewpoint (view).

### <Application to a Hierarchical Image Encoding/Decoding System>

The series of processes described above can also be applied to a hierarchical image encoding (scalable coding)/decoding system that performs encoding/decoding of a hierarchical image that is multi-layered (hierarchized) so as to have a scalability function with respect to a predetermined parameter. In that case, the present technology is applied to encoding/decoding of each hierarchical layer (layer).

### <Computer>

The above described series of processes can be performed by hardware or can be performed by software. In a case where the series of processes are to be performed by software, the program that forms the software is installed into a computer. Here, the computer may be a computer incorporated into special-purpose hardware, or may be a general-purpose personal computer or the like that can execute various kinds of functions when various kinds of programs are installed thereinto, for example.

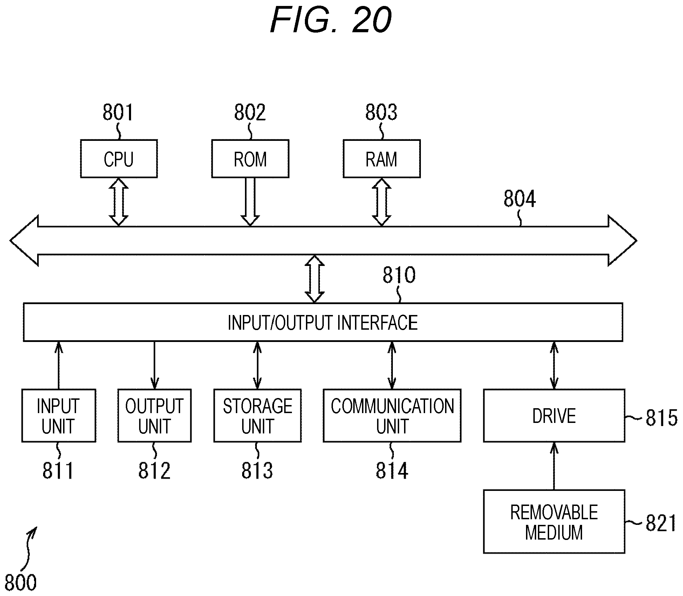

Fig. 20 is a block diagram showing an example configuration of the hardware of a computer that performs the above described series of processes in accordance with a program.

In a computer 800 shown in Fig. 20, a central processing unit (CPU) 801, a read only memory (ROM) 802, and a random access memory (RAM) 803 are connected to one another by a bus 804.

An input/output interface 810 is also connected to the bus 804. An input unit 811, an output unit 812, a storage unit 813, a communication unit 814, and a drive 815 are connected to the input/output interface 810.

The input unit 811 is formed with a keyboard, a mouse, a microphone, a touch panel, an input terminal, or the like, for example. The output unit 812 is formed with a display, a speaker, an output terminal, or the like, for example. The storage unit 813 is formed with a hard disk, a RAM disk, a nonvolatile memory, or the like, for example. The communication unit 814 is formed with a network interface, for example. The drive 815 drives a removable medium 821 such as a magnetic disk, an optical disk, a magnetooptical disk, or a semiconductor memory.

In the computer having the above described configuration, the CPU 801 loads a program stored in the storage unit 813 into the RAM 803 via the input/output interface 810 and the bus 804, for example, and executes the program, so that the above described series of processes are performed. The RAM 803 also stores data necessary for the CPU 801 to perform various processes and the like as necessary.

The program to be executed by the computer (the CPU 801) may be recorded on the removable medium 821 as a packaged medium or the like to be used, for example. In that case, the program can be installed into the storage unit 813 via the input/output interface 810 when the removable medium 821 is mounted on the drive 815.

Alternatively, this program can be provided via a wired or wireless transmission medium such as a local area network, the Internet, or digital satellite broadcasting. In that case, the program may be received by the communication unit 814, and be installed into the storage unit 813.

Also, this program may be installed beforehand into the ROM 802 or the storage unit 813.

### <Applications of the Present Technology>

The encoding device 100 and the decoding device 200 according to the embodiments described above can be applied to various electronic apparatuses such as transmitters and receivers in satellite broadcasting, cable broadcasting such as cable TV, distribution via the Internet, distribution to terminals via cellular communication, or the like, recording apparatuses configured to record images in media such as optical disks, magnetic disks, and flash memory, and reproduction apparatuses configured to reproduce images from the storage media, for example.

### <First Example Application: Television Receiver>

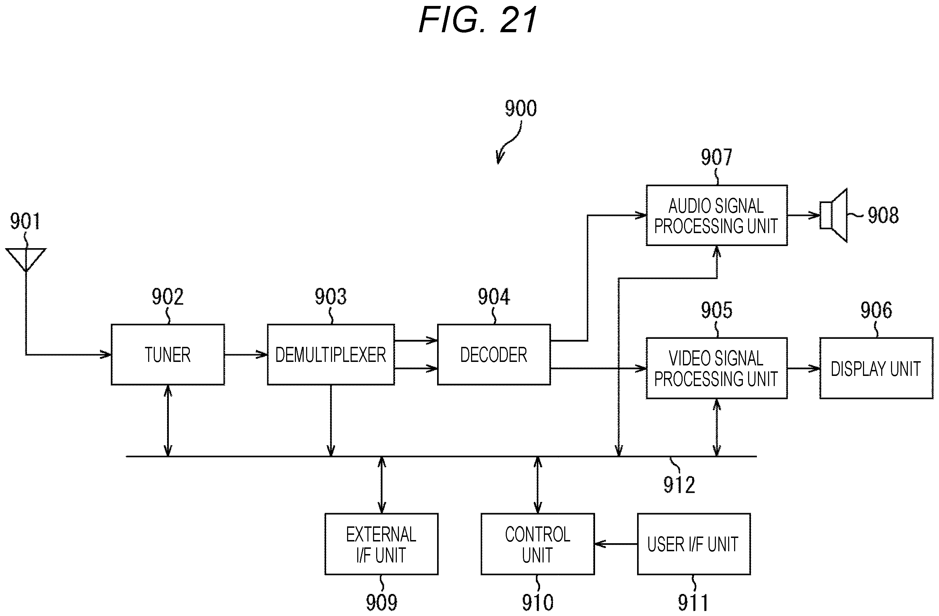

Fig. 21 schematically shows an example configuration of a television apparatus to which the above described embodiments are applied. A television apparatus 900 includes an antenna 901, a tuner 902, a demultiplexer 903, a decoder 904, a video signal processing unit 905, a display unit 906, an audio signal processing unit 907, a speaker 908, an external interface (I/F) unit 909, a control unit 910, a user interface (I/F) unit 911, and a bus 912.

The tuner 902 extracts a signal of a desired channel from broadcast signals received via the antenna 901, and demodulates the extracted signal. The tuner 902 then outputs an encoded bitstream obtained by the demodulation to the demultiplexer 903. In other words, the tuner 902 serves as a transmission unit in the television apparatus 900 that receives an encoded stream of encoded images.

The demultiplexer 903 separates a video stream and an audio stream of the current program to be viewed from the encoded bitstream, and outputs the separated streams to the decoder 904. The demultiplexer 903 also extracts auxiliary data such as an electronic program guide (EPG) from the encoded bitstream, and supplies the extracted data to the control unit 910. Note that, in a case where the encoded bitstream is scrambled, the demultiplexer 903 may descramble the encoded bitstream.

The decoder 904 decodes the video stream and the audio stream input from the demultiplexer 903. The decoder 904 then outputs the video data generated by the decoding to the video signal processing unit 905. The decoder 904 also outputs the audio data generated by the decoding to the audio signal processing unit 907.

The video signal processing unit 905 reproduces the video data input from the decoder 904, and causes the display unit 906 to display the video data. The video signal processing unit 905 may also cause the display unit 906 to display an application screen supplied via the network. Furthermore, the video signal processing unit 905 may perform additional processing such as noise removal on the video data, depending on settings, for example. The video signal processing unit 905 may further generate an image of a graphical user interface (GUI) such as a menu, a button, or a cursor, for example, and superimpose the generated image on the output image.

The display unit 906 is driven by a drive signal supplied from the video signal processing unit 905, and displays a video or an image on a video screen of a display device (such as a liquid crystal display, a plasma display, or an organic electroluminescence (EL) display (OELD), for example).

The audio signal processing unit 907 performs a reproduction process such as D/A conversion and amplification on the audio data input from the decoder 904, and outputs sound through the speaker 908. The audio signal processing unit 907 may also perform additional processing such as noise removal on the audio data.

The external interface unit 909 is an interface for connecting the television apparatus 900 to an external device or a network. For example, a video stream or an audio stream received via the external interface unit 909 may be decoded by the decoder 904. In other words, the external interface unit 909 also serves as a transmission unit in the television apparatus 900 that receives an encoded stream of encoded images.

The control unit 910 includes a processor such as a CPU, and memory such as a RAM and a ROM. The memory stores the program to be executed by the CPU, program data, EPG data, data acquired via the network, and the like. The program stored in the memory is read and executed by the CPU when the television apparatus 900 is activated, for example. By executing the program, the CPU controls operation of the television apparatus 900, in accordance with an operating signal input from the user interface unit 911, for example.

The user interface unit 911 is connected to the control unit 910. The user interface unit 911 includes buttons and switches for users to operate the television apparatus 900, a receiving unit for receiving remote control signals, and the like, for example. The user interface unit 911 detects a user operation via these components, generates an operating signal, and outputs the generated operating signal to the control unit 910.

The bus 912 connects the tuner 902, the demultiplexer 903, the decoder 904, the video signal processing unit 905, the audio signal processing unit 907, the external interface unit 909, and the control unit 910 to one another.

In the television apparatus 900 having such a configuration, the decoder 904 may have the functions of the image decoding device 200 described above. That is, the decoder 904 may decode encoded data by the method described in each of the above embodiments. In this manner, the television apparatus 900 can reduce decrease in the coding efficiency of received encoded bitstreams.

Further, in the television apparatus 900 configured as described above, the video signal processing unit 905 may be capable of encoding image data supplied from the decoder 904, for example, and supplying the obtained encoded data to the outside of the television apparatus 900 via the external interface unit 909. In that case, the video signal processing unit 905 may have the functions of the encoding device 100 described above. That is, the video signal processing unit 905 may encode image data supplied from the decoder 904 by the method described in each of the above embodiments. In this manner, the television apparatus 900 can prevent error propagation in an image. In other words, degradation of image quality can be prevented.

### <Second Example Application: Portable Telephone Apparatus>

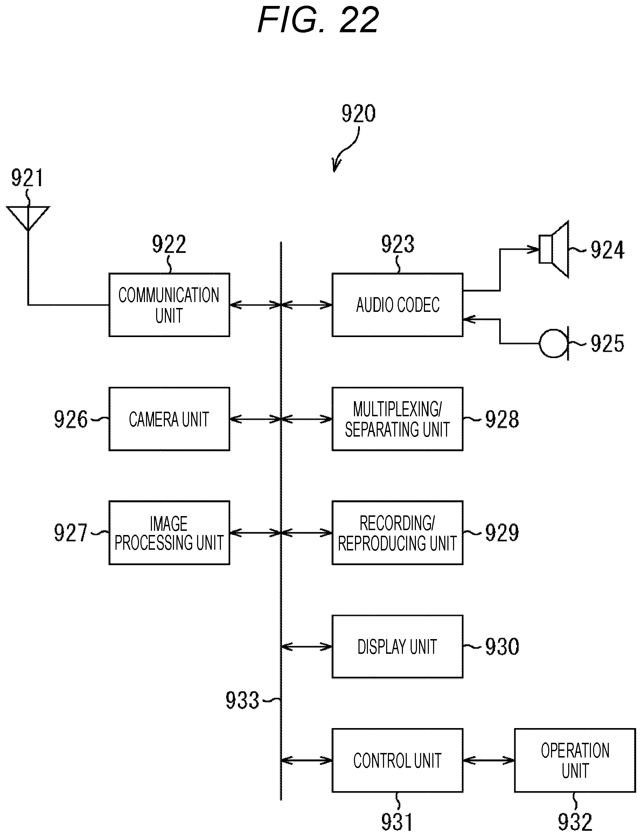

Fig. 22 schematically shows an example configuration of a portable telephone apparatus to which the above described embodiments are applied. A portable telephone apparatus 920 includes an antenna 921, a communication unit 922, an audio codec 923, a speaker 924, a microphone 925, a camera unit 926, an image processing unit 927, a multiplexing/separating unit 928, a recording/reproducing unit 929, a display unit 930, a control unit 931, an operation unit 932, and a bus 933.

The antenna 921 is connected to the communication unit 922. The speaker 924 and the microphone 925 are connected to the audio codec 923. The operation unit 932 is connected to the control unit 931. The bus 933 connects the communication unit 922, the audio codec 923, the camera unit 926, the image processing unit 927, the multiplexing/separating unit 928, the recording/reproducing unit 929, the display unit 930, and the control unit 931 to one another.

The portable telephone apparatus 920 performs operation such as transmission/reception of audio signals, transmission/reception of electronic mail and image data, capturing of images, recording of data, and the like in various operation modes including a voice call mode, a data communication mode, an imaging mode, and a video telephone mode.

In the voice call mode, an analog audio signal generated by the microphone 925 is supplied to the audio codec 923. The audio codec 923 converts the analog audio signal to audio data, performs A/D conversion on the converted audio data, and compresses the audio data. The audio codec 923 then outputs the compressed audio data to the communication unit 922. The communication unit 922 encodes and modulates the audio data, to generate a transmission signal. The communication unit 922 then transmits the generated transmission signal to a base station (not shown) via the antenna 921. The communication unit 922 also performs amplification and frequency conversion on a radio signal received via the antenna 921, and obtains a reception signal. The communication unit 922 then demodulates and decodes the reception signal to generate audio data, and outputs the generated audio data to the audio codec 923. The audio codec 923 performs decompression and D/A conversion on the audio data, to generate an analog audio signal. The audio codec 923 then supplies the generated audio signal to the speaker 924, to cause the speaker 924 to output sound.

Meanwhile, in the data communication mode, the control unit 931 generates text data constituting an electronic mail in accordance with an operation performed by a user via the operation unit 932, for example. The control unit 931 also causes the display unit 930 to display the text. The control unit 931 also generates electronic mail data in response to an instruction for transmission from the user via the operation unit 932, and outputs the generated electronic mail data to the communication unit 922. The communication unit 922 encodes and modulates the electronic mail data, to generate a transmission signal. The communication unit 922 then transmits the generated transmission signal to a base station (not shown) via the antenna 921. The communication unit 922 also performs amplification and frequency conversion on a radio signal received via the antenna 921, and obtains a reception signal. The communication unit 922 then demodulates and decodes the reception signal to restore the electronic mail data, and outputs the restored electronic mail data to the control unit 931. The control unit 931 causes the display unit 930 to display the content of the electronic mail, and supplies the electronic mail data to the recording/reproducing unit 929 to write the data into the storage medium thereof.

The recording/reproducing unit 929 includes a readable/writable storage medium. For example, the storage medium may be an internal storage medium such as a RAM or flash memory, or may be an externally mounted storage medium such as a hard disk, a magnetic disk, a magnetooptical disk, an optical disk, a universal serial bus (USB) memory, or a memory card.

Meanwhile, in the imaging mode, the camera unit 926 generates image data by capturing an image of an object, for example, and outputs the generated image data to the image processing unit 927. The image processing unit 927 encodes the image data input from the camera unit 926, and supplies the encoded stream to the recording/reproducing unit 929 to write the encoded stream into the storage medium thereof.

Further, in an image display mode, the recording/reproducing unit 929 reads the encoded stream recorded in the storage medium, and outputs the encoded stream to the image processing unit 927. The image processing unit 927 decodes the encoded stream input from the recording/reproducing unit 929, and supplies the image data to the display unit 930, to cause the display unit 930 to display the image.

Further, in the video telephone mode, the multiplexing/separating unit 928 multiplexes a video stream encoded by the image processing unit 927 and an audio stream input from the audio codec 923, for example, and outputs the multiplexed stream to the communication unit 922. The communication unit 922 encodes and modulates the stream, to generate a transmission signal. The communication unit 922 then transmits the generated transmission signal to a base station (not shown) via the antenna 921. The communication unit 922 also performs amplification and frequency conversion on a radio signal received via the antenna 921, and obtains a reception signal. The transmission signal and the reception signal may include an encoded bitstream. The communication unit 922 then restores the stream by demodulating and decoding the reception signal, and outputs the restored stream to the multiplexing/separating unit 928. The multiplexing/separating unit 928 separates the video stream and the audio stream from the input stream, and outputs the video stream to the image processing unit 927 and the audio stream to the audio codec 923. The image processing unit 927 decodes the video stream, to generate video data. The video data is supplied to the display unit 930, and a series of images is displayed by the display unit 930. The audio codec 923 performs decompression and D/A conversion on the audio stream, to generate an analog audio signal. The audio codec 923 then supplies the generated audio signal to the speaker 924, to cause the speaker 924 to output sound.

In the portable telephone apparatus 920 having the above described configuration, the image processing unit 927 may have the functions of the above described encoding device 100, for example. That is, the image processing unit 927 may encode image data by the method described in each of the above embodiments. In this manner, the portable telephone apparatus 920 can prevent error propagation in an image. In other words, degradation of image quality can be prevented.

Also, in the portable telephone apparatus 920 having the above described configuration, the image processing unit 927 may have the functions of the above described image decoding device 200, for example. That is, the image processing unit 927 may decode encoded data by the method described in each of the above embodiments. In this manner, the portable telephone apparatus 920 can reduce decrease in the coding efficiency of encoded data.

### <Third Application Example: Imaging Apparatus>

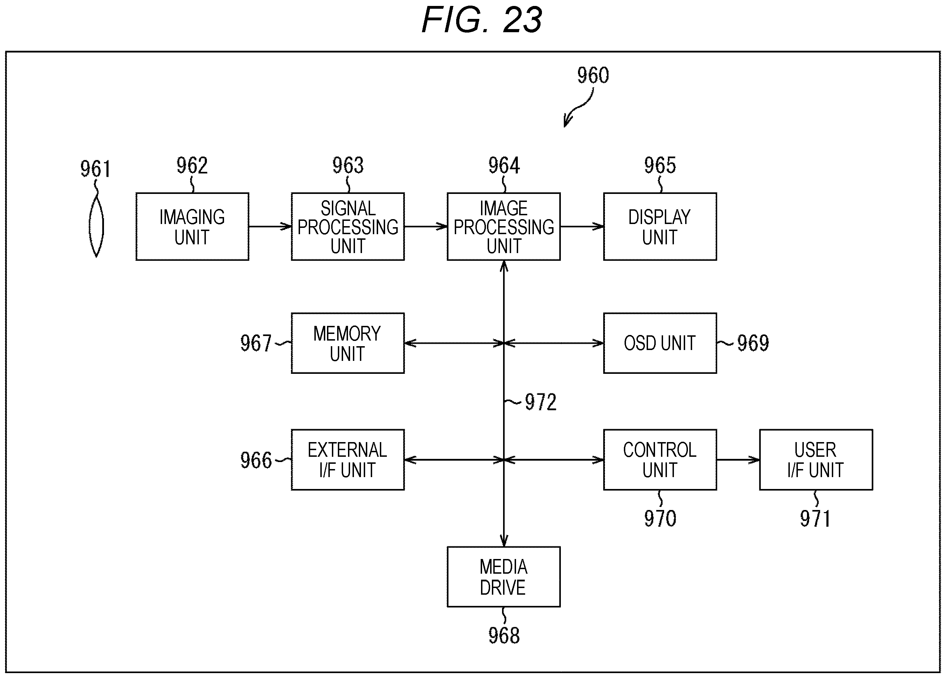

Fig. 23 schematically shows an example configuration of an imaging apparatus to which the above described embodiments are applied. An imaging apparatus 960 generates an image by imaging an object, encodes the image data, and records the image data on a recording medium.

The imaging apparatus 960 includes an optical block 961, an imaging unit 962, a signal processing unit 963, an image processing unit 964, a display unit 965, an external interface (I/F) unit 966, a memory unit 967, a media drive 968, an OSD unit 969, a control unit 970, a user interface (I/F) unit 971, and a bus 972.

The optical block 961 is connected to the imaging unit 962. The imaging unit 962 is connected to the signal processing unit 963. The display unit 965 is connected to the image processing unit 964. The user interface unit 971 is connected to the control unit 970. The bus 972 connects the image processing unit 964, the external interface unit 966, the memory unit 967, the media drive 968, the OSD unit 969, and the control unit 970 to one another.

The optical block 961 includes a focus lens, a diaphragm, and the like. The optical block 961 forms an optical image of an object on the imaging surface of the imaging unit 962. The imaging unit 962 includes an image sensor such as a charge coupled device (CCD) or a complementary metal oxide semiconductor (CMOS), and converts the optical image formed on the imaging surface into an image signal as an electrical signal by photoelectric conversion. The imaging unit 962 then outputs the image signal to the signal processing unit 963.

The signal processing unit 963 performs various kinds of camera signal processing such as knee correction, gamma correction, and color correction on the image signal input from the imaging unit 962. The signal processing unit 963 outputs the image data subjected to the camera signal processing, to the image processing unit 964.

The image processing unit 964 encodes the image data input from the signal processing unit 963, to generate encoded data. The image processing unit 964 then outputs the generated encoded data to the external interface unit 966 or the media drive 968. The image processing unit 964 also decodes encoded data input from the external interface unit 966 or the media drive 968, to generate image data. The image processing unit 964 then outputs the generated image data to the display unit 965. The image processing unit 964 may also output image data input from the signal processing unit 963 to the display unit 965, and cause the display unit 965 to display the image. The image processing unit 964 may also superimpose data for display acquired from the OSD unit 969 on the image to be output to the display unit 965.

The OSD unit 969 may generate a GUI image such as a menu, a button, or a cursor, for example, and output the generated image to the image processing unit 964.

The external interface unit 966 is formed as a USB input/output terminal, for example. The external interface unit 966 connects the imaging apparatus 960 to a printer at the time of printing of an image, for example. A drive is also connected to the external interface unit 966, if necessary. A removable medium such as a magnetic disk or an optical disk is mounted on the drive, for example, so that a program read from the removable medium can be installed into the imaging apparatus 960. Furthermore, the external interface unit 966 may be a network interface connected to a network such as a LAN or the Internet. In other words, the external interface unit 966 has a role as a transmission unit in the imaging apparatus 960.

The recording medium to be mounted on the media drive 968 may be a readable/writable removable medium such as a magnetic disk, a magnetooptical disk, an optical disk, or a semiconductor memory, for example. Alternatively, a recording medium may be mounted on the media drive 968 in a fixed manner, to form an immobile storage unit such as an internal hard disk drive or an solid state drive (SSD), for example.

The control unit 970 includes a processor such as a CPU, and memory such as a RAM and a ROM. The memory stores the program to be executed by the CPU, program data, and the like. The program stored in the memory is read and executed by the CPU when the imaging apparatus 960 is activated, for example. By executing the program, the CPU controls operation of the imaging apparatus 960 in accordance with an operating signal input from the user interface unit 971, for example.

The user interface unit 971 is connected to the control unit 970. The user interface unit 971 includes buttons, switches, and the like, for the user to operate the imaging apparatus 960, for example. The user interface unit 971 detects an operation performed by the user via these components, generates an operating signal, and outputs the generated operating signal to the control unit 970.

In the imaging apparatus 960 having the above described configuration, the image processing unit 964 may have the functions of the above described encoding device 100, for example. That is, the image processing unit 964 may encode image data by the method described in each of the above embodiments. In this manner, the imaging apparatus 960 can prevent error propagation in an image. In other words, degradation of image quality can be prevented.

Further, in the imaging apparatus 960 having the above described configuration, the image processing unit 964 may have the functions of the above described decoding device 200, for example. That is, the image processing unit 964 may decode encoded data by the method described in each of the above embodiments. In this manner, the imaging apparatus 960 can prevent error propagation in an image. In other words, degradation of image quality can be prevented.

### <Fourth Example Application: Network System>

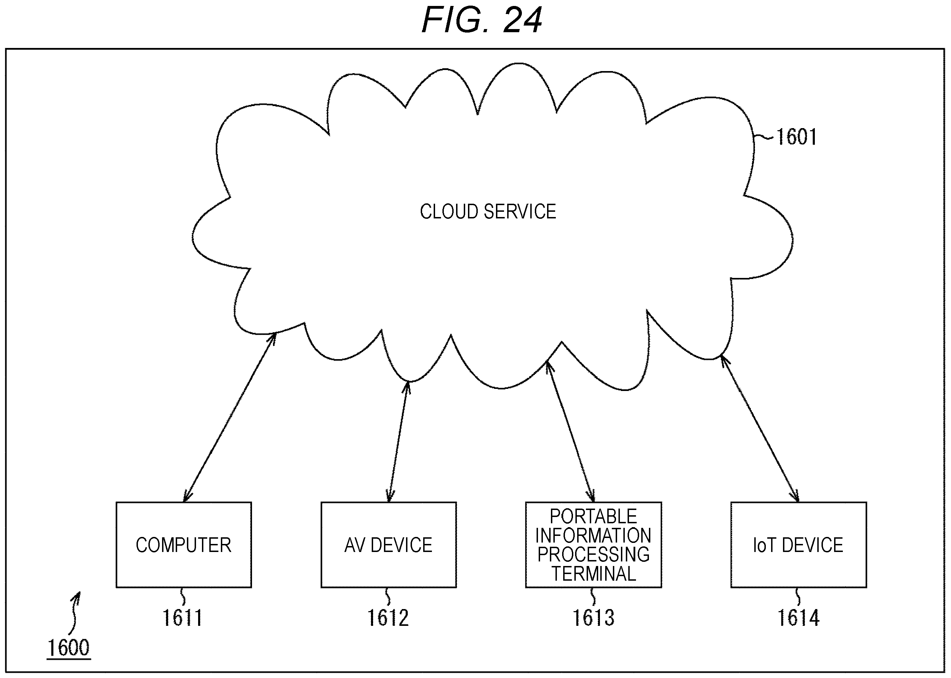

The present technology can also be applied to a network system formed with a plurality of devices. Fig. 24 schematically shows an example configuration of a network system to which the present technology is applied.

A network system 1600 shown in Fig. 24 is a system in which devices exchange information about images (moving images) via a network. A cloud service 1601 of the network system 1600 is a system that provides services related to images (moving images), for terminals such as a computer 1611, an audiovisual (AV) device 1612, a portable information processing terminal 1613, and an Internet of Things (IoT) device 1614 that are communicably connected to the cloud service 1601. For example, the cloud service 1601 provides terminals with a service for supplying image (moving image) content, such as video distribution (on-demand or live distribution). The cloud service 1601 also provides a backup service for receiving and storing image (moving image) content from terminals, for example. The cloud service 1601 further provides a service for mediating the exchange of image (moving image) content between terminals, for example.

The cloud service 1601 may have any appropriate physical configuration. For example, the cloud service 1601 may include various servers such as a server that stores and manages moving images, a server that distributes moving images to terminals, a server that acquires moving images from terminals, and a server that manages users (terminals) and billing, and a network such as the Internet or a LAN.

The computer 1611 is formed with an information processing device such as a personal computer, a server, or a workstation, for example. The AV device 1612 is formed with an image processing device such as a television receiver, a hard disk recorder, a game machine, or a camera, for example. The portable information processing terminal 1613 is formed with a portable information processing device such as a notebook personal computer, a tablet terminal, a portable telephone device, or a smartphone, for example. The IoT device 1614 is formed with any appropriate object that performs processing related to images, such as a machine, a home appliance, furniture, some other object, an IC tag, or a card-type device, for example. Each of these terminals has a communication function, and is capable of connecting to the cloud service 1601 (establishing a session) to exchange information (or communicate) with the cloud service 1601. Each terminal can also communicate with other terminals. Communication between terminals may be performed via the cloud service 1601, or may be performed without the cloud service 1601.

In a case where the present technology is applied to the above described network system 1600, and image (moving image) data is exchanged between terminals or between a terminal and the cloud service 1601, the image data may be encoded/decoded in the manner described above in each of the embodiments. That is, each of the terminals (the computer 1611 through the IoT device 1614) and the cloud service 1601 may have the functions of the encoding device 100 and the decoding device 200 described above. In this manner, the terminals and the cloud service 1611 that exchange image data with one another can prevent error propagation in an image. In other words, degradation of image quality can be prevented.

### <Other Aspects>

Note that various kinds of information relating to encoded data (bitstreams) may be multiplexed with the encoded data and be then transmitted or recorded, or may be transmitted or recorded as separate data associated with the encoded data without being multiplexed with the encoded data. Here, the term "to associate" means to enable use of other data (or a link to other data) while data is processed, for example. That is, pieces of data associated with each other may be integrated as one piece of data, or may be regarded as separate pieces of data. For example, information associated with encoded data (an image) may be transmitted through a transmission path different from the encoded data (image). Further, information associated with encoded data (an image) may be recorded in a recording medium different from the encoded data (image) (or in a different recording area of the same recording medium), for example. Note that this "association" may apply to some of the data, instead of the entire data. For example, an image and the information corresponding to the image may be associated with each other for any appropriate unit, such as for a plurality of frames, each frame, or some portion in each frame.

Also, as described above, in this specification, the terms "to combine", "to multiplex", "to add", "to integrate", "to include", "to store", "to contain", "to incorporate, "to insert", and the like mean combining a plurality of objects into one, such as combining encoded data and meta data into one piece of data, for example, and mean a method of the above described "association".

Further, embodiments of the present technology are not limited to the above described embodiments, and various modifications may be made to them without departing from the scope of the present technology.

For example, in this specification, a system means an assembly of a plurality of components (devices, modules (parts), and the like), and not all the components need to be provided in the same housing. In view of this, a plurality of devices that are housed in different housings and are connected to one another via a network form a system, and one device having a plurality of modules housed in one housing is also a system.

Furthermore, any configuration described above as one device (or one processing unit) may be divided into a plurality of devices (or processing units), for example. Conversely, any configuration described above as a plurality of devices (or processing units) may be combined into one device (or one processing unit). Furthermore, it is of course possible to add components other than those described above to the configuration of any of the devices (or processing units). Further, some components of a device (or processing unit) may be incorporated into the configuration of another device (or processing unit) as long as the configuration and the functions of the entire system remain substantially the same.

The present technology can also be embodied in a cloud computing configuration in which one function is shared among a plurality of devices via a network, and processing is performed by the devices cooperating with one another, for example.

Further, the above described program can be executed by any appropriate device, for example. In that case, the device should have necessary functions (function blocks and the like) so that necessary information can be obtained.

Meanwhile, the respective steps described with reference to the above described flowcharts can be carried out by one device or can be shared among a plurality of devices, for example. Furthermore, in a case where a plurality of processes is included in one step, the plurality of processes included in the step can be performed by one device or can be shared among a plurality of devices.

Note that a program to be executed by a computer may be a program for performing the processes in the steps according to the program in chronological order in accordance with the sequence described in this specification, or may be a program for performing processes in parallel or performing a process when necessary, such as when there is a call. Further, the processes in the steps according to this program may be executed in parallel with the processes according to another program, or may be executed in combination with the processes according to another program.

Note that, as long as there is no inconsistency, the plurality of technologies described in this specification can be implemented independently of one another. It is of course also possible to implement a combination of some of the plurality of technologies. For example, the present technology described in one of the embodiments can be implemented in combination with the present technology described in another one of the embodiments. Further, any of the technologies described above can be implemented in combination with some other technology not described above.

Note that the present technology may also be embodied in the configurations described below.
(1) An image processing device including
   a prediction mode determination unit that assigns an intra region to be subjected to intra prediction to an intra assignment direction before image data of a plurality of pictures is encoded, obtains intra region coordinate information by moving the intra region in a direction perpendicular to the intra assignment direction so that all units of coding in the pictures become the intra region, and, on the basis of the intra region coordinate information, determines inter prediction to be a prediction mode in a region peripheral to the intra region, the intra assignment direction being one of a vertical direction and a horizontal direction.
(2) The image processing device according to (1), further including
   a setting unit that sets an intra prediction reference flag to ON when intra prediction is performed, the intra prediction reference flag indicating that adjacent pixel reference is restricted only to pixels in an intra region,
   in which,
   when the intra prediction reference flag is set to ON by the setting unit, the prediction mode determination unit determines inter prediction to be a prediction mode in a region peripheral to the intra region, on the basis of the intra region coordinate information.
(3) The image processing device according to (1) or (2), in which, when the intra assignment direction is a vertical direction, the prediction mode determination unit determines inter prediction to be a prediction mode in regions to the right and the left of the intra region.
(4) The image processing device according to (1) or (2), in which, when the intra assignment direction is a horizontal direction, the prediction mode determination unit determines inter prediction to be a prediction mode in a region above the intra region.
(5) The image processing device according to (2), further including
   a replacement unit that replaces an intra prediction direction with a direction in which there is no reference to pixels in an inter region, when there is reference to pixels in an inter region in the determined intra prediction direction when the intra prediction is performed.
(6) An image processing method including
   an image processing device assigning an intra region to be subjected to intra prediction to an intra assignment direction before image data of a plurality of pictures is encoded, obtaining intra region coordinate information by moving the intra region in a direction perpendicular to the intra assignment direction so that all units of coding in the pictures become the intra region, and, on the basis of the intra region coordinate information, determining inter prediction to be a prediction mode in a region peripheral to the intra region, the intra assignment direction being one of a vertical direction and a horizontal direction.
(7) An image processing device including
   a prediction mode determination unit that assigns an intra region to be subjected to intra prediction to an intra assignment direction before image data of a plurality of pictures is encoded, obtains intra region coordinate information by moving the intra region in a direction perpendicular to the intra assignment direction so that all units of coding in the pictures become the intra region, and, on the basis of the intra region coordinate information, determines a prediction mode not using a pixel adjacent to the intra region to be an intra prediction mode at a boundary portion of the intra region.
(8) The image processing device according to (7), further including
   a setting unit that sets an intra prediction reference flag to OFF when intra prediction is performed, the intra prediction reference flag indicating that adjacent pixel reference is restricted only to pixels in an intra region,
   in which,
   when the intra prediction reference flag is set to OFF by the setting unit, the prediction mode determination unit determines a prediction mode not using a pixel adjacent to the intra region to be an intra prediction mode at a boundary portion of the intra region, on the basis of the intra region coordinate information.
(9) The image processing device according to (7) or (8), in which, when the intra assignment direction is a vertical direction, the prediction mode determination unit determines a prediction mode not using a pixel adjacent to the intra region to be an intra prediction mode at boundary portions to the right and the left of the intra region.
(10) The image processing device according to (7) or (8), in which, when the intra assignment direction is a horizontal direction, the prediction mode determination unit determines a prediction mode not using a pixel adjacent to the intra region to be an intra prediction mode at a boundary portion above the intra region.
(11) An image processing method including
   an image processing device assigning an intra region to be subjected to intra prediction to an intra assignment direction before image data of a plurality of pictures is encoded, obtaining intra region coordinate information by moving the intra region in a direction perpendicular to the intra assignment direction so that all units of coding in the pictures become the intra region, and, on the basis of the intra region coordinate information, determining a prediction mode not using a pixel adjacent to the intra region to be an intra prediction mode at a boundary portion of the intra region.

### REFERENCE SIGNS LIST

- 1: Screen
- 10: Intra stripe
- 10a: Block
- 11: Transmission error region
- 21a: Block
- 31L, 31R, 31U: Inter block
- 100, 100-1 to 100-M: Encoding device
- 111: Setting unit
- 112: Encoding unit
- 146: Intra prediction unit
- 147: Motion prediction/compensation unit
- 148: Mode determination unit
- 149: Intra prediction direction replacement unit
- 200, 200-1 to 200-M: Decoding device
- 213: Decoding unit
- 251L, 251R, 251U: Boundary portion
- 300: Television conference system
- 312: Combining device
- 313-1 to 313M: Display device

## Claims

1. An image processing device comprising
a prediction mode determination unit that assigns an intra region to be subjected to intra prediction to an intra assignment direction before image data of a plurality of pictures is encoded, obtains intra region coordinate information by moving the intra region in a direction perpendicular to the intra assignment direction so that all units of coding in the pictures become the intra region, and, on a basis of the intra region coordinate information, determines inter prediction to be a prediction mode in a region peripheral to the intra region, the intra assignment direction being one of a vertical direction and a horizontal direction.

2. The image processing device according to claim 1, further comprising
a setting unit that sets an intra prediction reference flag to ON when intra prediction is performed, the intra prediction reference flag indicating that adjacent pixel reference is restricted only to pixels in an intra region,
wherein,
when the intra prediction reference flag is set to ON by the setting unit, the prediction mode determination unit determines inter prediction to be a prediction mode in a region peripheral to the intra region, on a basis of the intra region coordinate information.

3. The image processing device according to claim 2, wherein, when the intra assignment direction is a vertical direction, the prediction mode determination unit determines inter prediction to be a prediction mode in regions to a right and a left of the intra region.

4. The image processing device according to claim 2, wherein, when the intra assignment direction is a horizontal direction, the prediction mode determination unit determines inter prediction to be a prediction mode in a region above the intra region.

5. The image processing device according to claim 2, further comprising
a replacement unit that replaces an intra prediction direction with a direction in which there is no reference to pixels in an inter region, when there is reference to pixels in an inter region in the determined intra prediction direction when the intra prediction is performed.

6. An image processing method comprising
an image processing device assigning an intra region to be subjected to intra prediction to an intra assignment direction before image data of a plurality of pictures is encoded, obtaining intra region coordinate information by moving the intra region in a direction perpendicular to the intra assignment direction so that all units of coding in the pictures become the intra region, and, on a basis of the intra region coordinate information, determining inter prediction to be a prediction mode in a region peripheral to the intra region, the intra assignment direction being one of a vertical direction and a horizontal direction.

7. An image processing device comprising
a prediction mode determination unit that assigns an intra region to be subjected to intra prediction to an intra assignment direction before image data of a plurality of pictures is encoded, obtains intra region coordinate information by moving the intra region in a direction perpendicular to the intra assignment direction so that all units of coding in the pictures become the intra region, and, on a basis of the intra region coordinate information, determines a prediction mode not using a pixel adjacent to the intra region to be an intra prediction mode at a boundary portion of the intra region.

8. The image processing device according to claim 7, further comprising
a setting unit that sets an intra prediction reference flag to OFF when intra prediction is performed, the intra prediction reference flag indicating that adjacent pixel reference is restricted only to pixels in an intra region,
wherein,
when the intra prediction reference flag is set to OFF by the setting unit, the prediction mode determination unit determines a prediction mode not using a pixel adjacent to the intra region to be an intra prediction mode at a boundary portion of the intra region, on a basis of the intra region coordinate information.

9. The image processing device according to claim 8, wherein, when the intra assignment direction is a vertical direction, the prediction mode determination unit determines a prediction mode not using a pixel adjacent to the intra region to be an intra prediction mode at boundary portions to a right and a left of the intra region.

10. The image processing device according to claim 8, wherein, when the intra assignment direction is a horizontal direction, the prediction mode determination unit determines a prediction mode not using a pixel adjacent to the intra region to be an intra prediction mode at a boundary portion above the intra region.

11. An image processing method comprising
an image processing device assigning an intra region to be subjected to intra prediction to an intra assignment direction before image data of a plurality of pictures is encoded, obtaining intra region coordinate information by moving the intra region in a direction perpendicular to the intra assignment direction so that all units of coding in the pictures become the intra region, and, on a basis of the intra region coordinate information, determining a prediction mode not using a pixel adjacent to the intra region to be an intra prediction mode at a boundary portion of the intra region.
